(19) Europäisches Patentamt
European Patent Office
Office européen des brevets

(11) **EP 4 559 152 B1**

(12) **EUROPÄISCHE PATENTSCHRIFT**

(45) Veröffentlichungstag und Bekanntmachung des Hinweises auf die Patenterteilung:
**29.04.2026  Patentblatt 2026/18**

(21) Anmeldenummer: **23745454.1**

(22) Anmeldetag: **19.07.2023**

(51) Internationale Patentklassifikation (IPC):
**H04L 12/417** (2006.01)

(52) Gemeinsame Patentklassifikation (CPC):
**H04L 12/417**

(86) Internationale Anmeldenummer:
**PCT/EP2023/070018**

(87) Internationale Veröffentlichungsnummer:
**WO 2024/017947 (25.01.2024 Gazette 2024/04)**

(54) **SYNCHRONISIERTES DATENNETZWERK-SYSTEM UND VERFAHREN ZUM INITIALISIEREN SOWIE ZUM SYNCHRONISIEREN DESSELBEN**

SYNCHRONIZED DATA NETWORK SYSTEM, AND METHOD FOR INITIALIZING AND SYNCHRONIZING SAME

SYSTÈME DE RÉSEAU DE DONNÉES SYNCHRONISÉ ET PROCÉDÉ D'INITIALISATION ET DE SYNCHRONISATION DUDIT SYSTÈME

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **21.07.2022  DE 102022118267**

(43) Veröffentlichungstag der Anmeldung:
**28.05.2025  Patentblatt 2025/22**

(73) Patentinhaber: **Rockwell Collins Deutschland GmbH**
**69123 Heidelberg (DE)**

(72) Erfinder:
• **REUBOLD, Timo**
**69412 Eberbach (DE)**

• **ENGEL, Heiko**
**69214 Eppelheim (DE)**

(74) Vertreter: **Müller Hoffmann & Partner Patentanwälte mbB**
**St.-Martin-Straße 58**
**81541 München (DE)**

(56) Entgegenhaltungen:
EP-A2- 1 659 465     WO-A2-2021/119675
US-A1- 2006 168 612   US-A1- 2017 289 646
US-A1- 2018 062 764   US-A1- 2018 077 068
US-A1- 2018 103 414   US-A1- 2020 092 024
US-A1- 2021 144 517

**Beschreibung**

Die Erfindung betrifft ein synchronisiertes Datennetzwerk-System, insbesondere ein Daten-netzwerk-System im Einsatz als Avioniksystem-Datennetzwerk zur deterministischen und potenziell flugsicherheitsrelevanten Kommunikation zwischen den Datennetzwerk-Teilnehmern. Des Weiteren betrifft die Erfindung ein Verfahren zum Initialisieren und Synchronisieren des Datennetzwerk-Systems.

Bei einem Einsatz von Datennetzwerkkomponenten in einem Avioniksystem wird oft die Anforderung gestellt, eine deterministische Kommunikation zwischen den Teilnehmern in dem Avioniksystem-Datennetzwerk zu ermöglichen oder zu erleichtern, wie beispielhaft in US 2006/168612 A1 gezeigt wird. Dies ist in der Regel eine strenge Anforderung, beispielsweise in dem Fall, dass die Kommunikation einen wesentlichen Teil der Funktion mit direkten oder indirekten Auswirkungen auf die Flugsicherheit hat. Determinismus (Engl. determinism) ist ein abstrakter Begriff und wird in Dokument DO-297 "Integrated Modular Avionics (IMA) Development Guidance and Certification Considerations" 8. November 2005, RTCA SC-200, EUROCAE WG-6 als "die Fähigkeit beschrieben, ein vorhersagbares Ergebnis basierend auf vorhergegangenen Operationen zu erzeugen, wobei das Ergebnis in einem spezifizierten Zeitfenster wiederholbar stattfindet.

Ein Ansatz, wie ein deterministisches Verhalten einer Datennetzwerkimplementierung erreicht werden kann, ist durch absolute Kontrolle des Netzwerkdatenverkehrs in Zeit und Raum, was erlaubt, eine Bandbreitengarantie für die Kommunikation zwischen jeglichen zwei Teilnehmern in dem Netzwerk während einer präzise definierten Zeitperiode bereitzustellen. Dies wird in US 2018/062764 A1 beschrieben.

Ein wesentlicher Bestandteil, um dies zu erreichen, ist die Sicherstellung, dass jeder Datennetzwerk-Knoten in einem Datennetzwerk-System, welcher über ein Datennetzwerk durch jeweilige direkte Datenübertragungsstrecken mit anderen Datennetzwerk-Knoten verbunden ist, ein gemeinsames Verständnis von der aktuellen Systemzeit besitzt, mit einer definierten minimalen akzeptablen Präzisionsabweichung. Für das Funktionieren eines deterministischen Datennetzwerk-Systems ist es also unerlässlich, dass alle in dem Datennetzwerk enthaltenen Komponenten oder Datennetzwerk-Knoten miteinander synchronisiert sind und eine gemeinsame Zeitbasis besitzen. Das zeigt auch WO 2021/119675 A2.

Diese gemeinsame Uhrzeit kann durch verschiedene Zeitsynchronisierungswerkzeuge erreicht werden, wie beispielsweise Industriestandard-Methoden, wie das Präzisionszeitprotokoll (Engl. "precision time protocol") (PTP) und dessen entsprechenden Weiterentwicklungen für moderne Zeit-sensitive Netzwerke.

Industriestandardverfahren zur Zeitsynchronisation (im Folgenden einfach nur Synchronisation) werden optimiert für die Verwendung in komplexen, sich dynamisch ändernden, offenen Netzwerken und sie benötigen ausgeklügelte Verfahren, um eine gemeinsame Zeitbasis zwischen allen Teilnehmern herzustellen. Im Gegensatz dazu werden Avionik-Netzwerk-Systeme oft vorgefertigt und sind darüber hinaus abgeschlossene Systeme, um die Komplexität zu begrenzen. Unter diesen Umständen ist es also nötig, effiziente Ansätze zur Synchronisation und einfachere Mittel zur Verifikation eines deterministischen Verhaltens zu finden.

Im Gegensatz zu den im Stand der Technik bekannten Avioniksystem-Datennetzwerk-Standards (wie beispielsweise ARINC-664, Teil 7, AFDX) oder gerade noch erarbeitete Standards (beispielsweise CAIN auf TSN), ist es nötig, eine wesentlich geringere Komplexität für die Netzwerk-Komponenten zu erreichen, um Kosten zu reduzieren, um die auf die Synchronisierung verwendete Netzwerk-Rechenkapazität zu vereinfachen, um die Zeit für das Erreichen einer Sicherheitszertifizierung zu reduzieren, sowie um eine Erhöhung der Effizienz zu erreichen.

Der Erfindung liegt also die Aufgabe zugrunde, ein synchronisiertes Datennetzwerk-System sowie ein Verfahren zum Initialisieren und Synchronisieren desselben zu schaffen, durch welches eine geringere Komplexität von Netzwerkkomponenten, eine Verringerung von Kosten, eine starke Vereinfachung der für eine Synchronisierung aufgewendeten Rechenkapazität, eine Verringerung des Zeitaufwands für die Sicherheitszertifizierung und eine Erhöhung der Effizienz erreicht werden kann.

Diese Aufgabe wird durch das synchronisierte Datennetzwerk-System nach Anspruch 1 und 15 sowie durch die Verfahren nach Anspruch 13 und 14 gelöst. Vorteilhafte Ausgestaltungen und Weiterbildungen der Erfindung werden in den Unteransprüchen dargelegt.

Erfindungsgemäß ist ein synchronisiertes Datennetzwerk-System vorgesehen, welches ein Datennetzwerk aufweist, das Datennetzwerk-Knoten miteinander über direkte Datenübertragungsstrecken zwischen benachbarten Datennetzwerk-Knoten zum Datenaustausch verbindet. Unter diesen Datennetzwerk-Knoten ist erfindungsgemäß eine Knotenkette aus einem aufeinanderfolgenden ersten, zweiten und dritten Datennetzwerk-Knoten vorgesehen, wobei der zweite Datennetzwerk-Knoten dazu angepasst ist, auf einer Datenweiterleitungsstrecke von dem ersten Datennetzwerk-Knoten auf einer ersten direkten Datenübertragungsstrecke zwischen dem ersten und dem zweiten Datennetzwerk-Knoten gesendete Daten zu empfangen und auf einer zweiten direkten Datenübertragungsstrecke zwischen dem zweiten und dem dritten Datennetzwerk-Knoten an den dritten Datennetzwerk-Knoten senden, weiterzuleiten. Der zweite Datennetzwerk-Knoten ist dabei dazu angepasst, eine Weiterleitung der Daten auf einer Ein-Hop-Datenweiterleitungsstrecke zwischen erstem und drittem Datennetzwerk-Knoten so zu verzögern, dass die Hop-Latenz gleich einer vorbestimmten festen gemeinsamen Hop-Latenz ist.

Es ist also ein synchronisiertes Datennetzwerk-System vorgesehen, bei welchem die im Netzwerk teilnehmenden Datennetzwerk-Knoten so ausgestaltet sind, dass bei einer Weiterleitung von Daten, kommend von einem Sende-Datennetzwerk-Knoten zu einem Empfänger-Datennetzwerk-Knoten ein zwischenliegender Weiterleitungs-Datennetzwerk-Knoten die Weiterleitung der Daten so verzögert, dass die Zeitdauer des Hops oder die Hop-Latenz nicht mehr abhängig von netzwerkspezifischen oder knotenspezifischen Latenzen ist, sondern für jeden Weiterleitungsknoten auf eine für alle gleiche gemeinsame feste Hop-Latenz angeglichen oder nivelliert wird.

Durch diese Verzögerung erhöhen sich die Antwortzeiten oder Übertragungslatenzen zwar leicht, der Datendurchsatz bleibt jedoch gleich und gleichzeitig wird die Synchronisierung des gesamten Netzwerks massiv vereinfacht, da durch Synchronisierungsdatenpakete, welche in der Regel normale Datenpakete mit entsprechender Header-Information sind, von einem Master-Datennetzwerk-Knoten in einfachster Weise die Nebenuhren der Slave-Datennetzwerk-Knoten auf die Master-Clock synchronisiert werden können, indem der Zeitstempel des gesendeten Synchronisierungspakets des Masters bei Ankunft in einem Slave-Datennetzwerk-Knoten um die Anzahl der Hops mal der festen gemeinsamen Hop-Latenz ist.

Die im Folgenden beschriebene Synchronisierung eines Datennetzwerk-Systems kann auch bei einem dezentralen Datennetzwerk eingesetzt werden, wenn mehrere Netzwerk-Komponenten verlässliche Hauptuhren aufweisen. Somit wird durch die Erfindung ein hochredundantes Verfahren zur Synchronisierung eines Datennetzwerk-Systems zur deterministischen Kommunikation unter den Netzwerkteilnehmern geschaffen.

Bei einer implizierten Synchronisierung des Datennetzwerk-Systems mittels eines Master-Datennetzwerk-Knotens, der eine Hauptuhr aufweist, ist es bevorzugt, wenn der Master-Datennetzwerk-Knoten Synchronisierungsdatenpakete mit einem Hauptuhr-Zeitstempel $t_{tx}$ an Slave-Datennetzwerk-Knoten versendet und die Nebenuhren der Slave-Datennetzwerk-Knoten entsprechend der vollzogenen Anzahl an Hops h des Synchronisierungsdatenpakets zwischen Master-Datennetzwerk-Knoten und jeweiligen Slave-Datennetzwerk-Knoten sowie mittels der gemeinsamen Hop-Latenzdauer $d_{CH}$ gemäß der Formel $t_{master} = t_{tx} + d_{CH} * h$ mit der Hauptuhrzeit synchronisiert.

Für die Nivellierung auf eine gemeinsame Hop-Latenz über eine Ein-Hop-Datenweiterleitungsstrecke gibt es zwei Möglichkeiten der Definition einer Ein-Hop-Datenweiterleitungsstrecke. So ist es beispielsweise einerseits möglich, wenn die Ein-Hop-Datenweiterleitungstrecke einer Datenweiterleitungsstrecke entspricht, die beginnend an der Senderseite des ersten Datennetzwerk-Knotens über die direkte Datenübertragungsstrecke zwischen dem erstem und dem zweitem Datennetzwerk-Knoten durch den zweiten Datennetzwerk-Knoten hindurch und endend an der Senderseite des zweiten Datennetzwerk-Knotens verläuft. Es ist andererseits aber auch möglich, die Ein-Hop-Datenweiterleitungsstrecke so zu definieren, dass die Ein-Hop-Datenweiterleitungstrecke einer Datenweiterleitungsstrecke entspricht, die beginnend an der Empfängerseite des zweiten Datennetzwerk-Knotens durch den zweiten Datennetzwerk-Knoten hindurch und über die direkte Datenübertragungsstrecke zwischen dem zweitem und drittem Datennetzwerk-Knoten endend an der Empfängerseite des dritten Datennetzwerk-Knotens verläuft.

Für eine reale Umsetzung des synchronisierten Datennetzwerk-Systems ist es von Vorteil, wenn der zweite Datennetzwerk-Knoten eine Datensendeeinheit, welche mit einer direkten Datenübertragungsstrecke verbunden ist, um Daten zu weiteren Datennetzwerk-Knoten zu senden; eine Datenempfangseinheit, welche mit einer direkten Datenübertragungsstrecke verbunden ist, um Daten von weiteren Datennetzwerk-Knoten zu empfangen; eine Latenzabgleicheinheit, die dazu angepasst ist, mittels einer gespeicherten spezifischen Hop-Latenz der aktuellen Ein-Hop-Datenweiterleitungstrecke und mittels der vorbestimmten festen gemeinsamen Hop-Latenzdauer eine für die aktuelle Ein-Hop-Datenweiterleitungstrecke spezifische Latenzabgleichsdauer zu errechnen; und einen Verzögerungspuffer umfasst, der zwischen der Datenempfangseinheit und der Datensendeeinheit zwischengeschaltet ist, um die Weiterleitung von Datenpaketen auf der aktuellen Ein-Hop-Datenweiterleitungstrecke um die von der Latenzabgleicheinheit empfangene spezifische Latenzabgleichsdauer zu verzögern.

Dabei ist es zweckmäßig, wenn die Latenzabgleicheinheit einen Timer zum Messen einer Umlauf-Latenz auf einer zu vermessenden Ein-Hop-Datenweiterleitungstrecke; einen Speicher zum Speichern der intrinsischen Knotenlatenz, der Umlauf-Latenzen der Ein-Hop-Datenweiterleitungstrecken des zweiten Datennetzwerk-Knotens sowie der vorbestimmten festen gemeinsamen Hop-Latenz; und eine Recheneinheit umfasst, welche dazu angepasst ist, die Latenzabgleichsdauer über die Formel $d_{ARX} = d_{CH} - d_{RT}/2 - d_{SRX\_B}$ zu errechnen.

Für die reale Umsetzung einer Initialisierung und Synchronisierung des Datennetzwerk-Systems der Erfindung ist es von Vorteil, wenn der zweite Datennetzwerk-Knoten eine Kommunikations-Steuereinheit zur Steuerung einer Initialisierung und Synchronisierung umfasst, die eine Initialisierungssteuereinheit, die den Initialisierungsprozess der Datennetzwerk-Knoten steuert; und eine Synchronisierungssteuereinheit umfasst, die die Synchronisierung der Datennetzwerk-Knoten steuert.

Dabei ist es zweckmäßig, wenn die Initialisierungssteuereinheit den zweiten Datennetzwerk-Knoten als Slave-Datennetzwerk-Knoten zu folgenden Schritten veranlasst: Senden, von der Kommunikations-Steuereinheit, eines Umlauf-Latenz-Messbefehls an die Datensendeeinheit; Senden, durch die Datensendeeinheit, eines Umlaufsignals oder Ping-Signals über eine entsprechende direkte Datenübertragungsstrecke einer zu vermessenden Ein-Hop-Datenweiterleitungstrecke an eine Datenempfangseinheit eines entsprechenden empfangenden Datennetzwerk-Knotens; Starten eines Timers bei Versendung des Umlaufsignals durch die Latenzabgleichseinheit; Empfangen, durch die Datenempfangseinheit, des von dem entsprechenden Datennetzwerk-Knoten zurückgesandten Umlaufsignals über die entsprechende direkte Datenübertragungsstrecke; Stoppen des Timers durch die Latenzabgleichseinheit bei Empfang des zurückgesandten Umlaufsignals; Auslesen der Umlauf-Latenz aus dem Timer; Berechnen der spezifischen Hop-Latenz der zu vermessenden Ein-Hop-Datenweiterleitungstrecke durch Addition der intrinsischen Knotenlatenz zu der halben Umlauf- Latenz; Wiederholen der Schritte für alle zu vermessenden Ein-Hop-Datenweiterleitungstrecken; und Speichern der ermittelten Hop-Latenzen aller zu vermessenden Ein-Hop-Datenweiterleitungstrecken .

Optional kann hierbei, wenn bei der Initialisierung die gemeinsame Hop-Latenz aus allen ermittelten Hop-Latenzen aller zu vermessenden Ein-Hop-Datenweiterleitungstrecken durch einen Master-Datennetzwerk-Knoten festgelegt wird, ein weiterer Schritt des Übersendens der ermittelten Hop-Latenzen aller zu vermessenden Ein-Hop-Datenweiterleitungstrecken an den Master-Datennetzwerk-Knoten erfolgen.

Sollte der zweite Datennetzwerk-Knoten als Master-Datennetzwerk-Knoten fungieren, ist es von Vorteil, wenn die Initialisierungssteuereinheit den zweite Datennetzwerk-Knoten als Master-Datennetzwerk-Knoten zu folgenden Schritten veranlasst: Empfangen, von den Slave-Datennetzwerk-Knoten, der jeweiligen ermittelten Hop-Latenzen der zu vermessenden Ein-Hop-Datenweiterleitungstrecken aller Slave-Datennetzwerk-Knoten; und Festlegen einer gemeinsamen Hop-Latenz aus den übermittelten Hop-Latenzen, wobei die vorbestimmte feste gemeinsamen Hop-Latenz größer als alle übermittelten Hop-Latenzen ist.

Um sicherzustellen, dass die feste gemeinsame Hop-Latenz nicht unnötig groß gewählt wird, ist es zweckmäßig, wenn die feste gemeinsame Hop-Latenz einer Zeitdauer entspricht, die gleich einer mit einem Sicherheitsfaktor größer 1 skalierten oder mit einem Sicherheitsoffset beaufschlagten Hop-Latenz mit der längsten Zeitdauer ist.

Bei einer Synchronisierung des Datennetzwerk-Systems durch den zweiten Datennetzwerk-Knoten, welcher als Slave-Datennetzwerk-Knoten fungiert, ist es von Vorteil, wenn die Synchronisierungssteuereinheit den zweiten Datennetzwerk-Knoten als Slave-Datennetzwerk-Knoten zu folgenden Schritten veranlasst: Empfangen, von einem Master-Datennetzwerk-Knoten mit einer Hauptuhr, Synchronisierungsdatenpakete mit einem Hauptuhr-Zeitstempel $t_{tx}$; und Synchronisieren der Nebenuhr des zweiten Datennetzwerk-Knotens mit der Hauptuhrzeit entsprechend der vollzogenen Anzahl an Hops h des Synchronisierungsdatenpakets zwischen Master-Datennetzwerk-Knoten und dem zweitem Datennetzwerk-Knoten sowie mittels der gemeinsamen deterministischen Hop-Latenzdauer $d_{CH}$ gemäß der Formel $t_{master} = t_{tx} + d_{CH} * h$.

Sollte der zweite Datennetzwerk-Knoten als Master-Datennetzwerk-Knoten fungieren, ist es von Vorteil, wenn die Synchronisierungssteuereinheit den zweiten Datennetzwerk-Knoten als Master-Datennetzwerk-Knoten zum Senden zu einem Zeitpunkt $t_{tx}$ von Synchronisierungsdatenpaketen mit einem Hauptuhr-Zeitstempel $t_{tx}$ zu den Slave-Datennetzwerk-Knoten veranlasst.

Um in einfacher Weise die Anzahl der Hops mit dem Hauptuhr-Zeitstempel den Slave-Datennetzwerk-Knoten zur Verfügung zu stellen und um sicherzustellen, dass eine Synchronisierung aufgrund einer berechtigten Synchronisierung des Datenpakets eines Masters erfolgt, ist es von großem Vorteil, wenn das Synchronisierungsdatenpaket neben dem Hauptuhr-Zeitstempel die Anzahl der Hops sowie ein Kennungszeichen des Master-Datennetzwerk-Knoten enthält.

Das synchronisierte Datennetzwerk-System gemäß der Erfindung weist enorme Vorteile gegenüber dem Stand der Technik auf, wenn es als ein Avioniksystem-Datennetzwerk zur deterministischen und/oder flugsicherheitsrelevanten Kommunikation zwischen dem Datennetzwerk-Knoten eingesetzt wird. Hierbei ist es zweckmäßig, wenn das Datennetzwerk eine Ring-, Stern-, oder Netzstruktur mit bidirektionalem Datenaustausch aufweist.

Ferner wird erfindungsgemäß ein Verfahren zum Initialisieren des synchronisierten Datennetzwerk-Systems der Erfindung bereitgestellt, das die folgenden Schritte aufweist: Senden, von einer Kommunikations-Steuereinheit eines Slave-Datennetzwerk-Knotens, eines Umlauf-Latenz-Messbefehls an die Datensendeeinheit des Slave-Datennetzwerk-Knotens; Senden, durch die Datensendeeinheit des Slave-Datennetzwerk-Knotens, eines Umlaufsignals oder Ping-Signals über eine entsprechende direkte Datenübertragungsstrecke einer zu vermessenden Ein-Hop-Datenweiterleitungstrecke an eine Datenempfangseinheit eines entsprechenden weiteren Slave-Datennetzwerk-Knotens; Starten eines Timers des Slave-Datennetzwerk-Knotens bei Versendung des Umlaufsignals durch eine Latenzabgleichseinheit des Slave-Datennetzwerk-Knotens; Empfangen, durch die Datenempfangseinheit des Slave-Datennetzwerk-Knotens, des von dem entsprechenden weiteren Slave-Datennetzwerk-Knoten zurückgesandten Umlaufsignals über die entsprechende direkte Datenübertragungsstrecke; Stoppen des Timers durch die Latenzabgleichseinheit des Slave-Datennetzwerk-Knotens bei Empfang des zurückgesandten Umlaufsignals; Auslesen der Umlauf-Latenz aus dem Timer des Slave-Daten-

netzwerk-Knotens; Berechnen der spezifischen Hop-Latenz der zu vermessenden Ein-Hop-Datenweiterleitungstrecke durch Addition der intrinsischen Knotenlatenz zu der halben Umlauf- Latenz; Wiederholen der Schritte für alle zu vermessenden Ein-Hop-Datenweiterleitungstrecken; und Speichern der ermittelten Hop-Latenzen aller zu vermessenden Ein-Hop-Datenweiterleitungstrecken.

Optional kann hierbei, wenn bei der Initialisierung die gemeinsame Hop-Latenz aus allen ermittelten Hop-Latenzen aller zu vermessenden Ein-Hop-Datenweiterleitungstrecken durch einen Master-Datennetzwerk-Knoten festgelegt wird, folgende weitere Schritte durchgeführt werden: Übersenden der ermittelten Hop-Latenzen aller zu vermessenden Ein-Hop-Datenweiterleitungstrecken an den Master-Datennetzwerk-Knoten; Empfangen, durch den Master-Datennetzwerk-Knoten, der jeweiligen ermittelten Hop-Latenzen der zu vermessenden Ein-Hop-Datenweiterleitungstrecken aller Slave-Datennetzwerk-Knoten; Festlegen, durch den Master-Datennetzwerk-Knoten, einer gemeinsamen Hop-Latenz aus den übermittelten Hop-Latenzen, wobei die vorbestimmte feste gemeinsamen Hop-Latenz größer als alle übermittelten Hop-Latenzen ist.

Ferner wird erfindungsgemäß ein Verfahren zum Synchronisieren eines synchronisierten Datennetzwerk-Systems der Erfindung mit zumindest einem Master-Datennetzwerk-Knoten und Slave-Datennetzwerk-Knoten bereitgestellt, das die folgenden Schritte aufweist: Senden, durch den Master-Datennetzwerk-Knoten, zu einem Zeitpunkt $t_{tx}$ von Synchronisierungsdatenpaketen mit einem Hauptuhr-Zeitstempel $t_{tx}$ zu den Slave-Datennetzwerk-Knoten; Empfangen, durch die Slave-Datennetzwerk-Knoten, von dem Master-Datennetzwerk-Knoten mit einer Hauptuhr, Synchronisierungsdatenpakete mit einem Hauptuhr-Zeitstempel $t_{tx}$; und Synchronisieren der Nebenuhr des Slave-Datennetzwerk-Knoten mit der Hauptuhrzeit entsprechend der vollzogenen Anzahl an Hops h des Synchronisierungsdatenpakets zwischen Master-Datennetzwerk-Knoten und Slave-Datennetzwerk-Knoten sowie mittels der gemeinsamen deterministischen Hop-Latenzdauer $d_{CH}$ gemäß der Formel $t_{master} = t_{tx} + d_{CH}*h$.

Gemäß der Erfindung werden auch ein synchronisiertes Datennetzwerk-System, ein Master-Datennetzwerk-Knoten und ein Slave-Datennetzwerk-Knoten vorgesehen, die jeweils dazu angepasst sind, die obigen erfindungsgemäßen Verfahren auszuführen.

Die Erfindung wird im Folgenden beispielsweise anhand der Zeichnung näher erläutert. Es zeigen:

Fig. 1 eine stark vereinfachte schematische Ansicht eines synchronisierten Datennetzwerk-Systems in Ringstruktur gemäß der Erfindung,

Fig. 2 eine Knotenkette eines ersten, zweiten und dritten Datennetzwerk-Knotens, die durch eine erste und zweite direkte Datenübertragungsstrecke miteinander verbunden sind,

Fig. 3A ein Zeitablaufdiagramm der Verzögerung der Weiterleitung der Daten durch den zweiten Datennetzwerk-Knoten gemäß einem ersten Ausführungsbeispiel der Erfindung,

Fig. 3B ein Zeitablaufdiagramm der Verzögerung der Daten durch den zweiten Datennetzwerk-Knoten gemäß einem zweiten Ausführungsbeispiel der Erfindung,

Fig. 4A eine Knotenkette von einem ersten, zweiten, dritten und vierten Datennetzwerk-Knoten, welche die Verzögerung der Datenweiterleitung zum Zwecke der Synchronisierung gemäß dem ersten Ausführungsbeispiel der Erfindung verdeutlichen,

Fig. 4B eine Knotenkette aus einem zweiten, dritten, vierten und fünften Datennetzwerk-Knoten, welche den Zeitablauf der Datenweiterleitungsverzögerung zum Zwecke der Synchronisierung gemäß dem zweiten Ausführungsbeispiel der Erfindung illustriert,

Fig. 5 ein stark vereinfachtes schematisches Blockdiagramm eines Datennetzwerk-Knotens gemäß der Erfindung,

Fig. 6A und 6B Komponenten der Datennetzwerk-Knoten und deren Rolle bei einer Initialisierung des synchronisierten Datennetzwerk-Systems gemäß der Erfindung,

Fig. 7 ein Prozessablaufdiagramm des Verfahrens zum Initialisieren des synchronisierten Datennetzwerk-Systems gemäß der Erfindung, und

Fig. 8 ein Prozessablaufdiagramm eines Verfahrens zum Synchronisieren eines synchronisierten Datennetzwerk-Systems gemäß der Erfindung.

In den verschiedenen Figuren der Zeichnung sind einander entsprechende Bauelemente mit gleichen Bezugszeichen versehen.

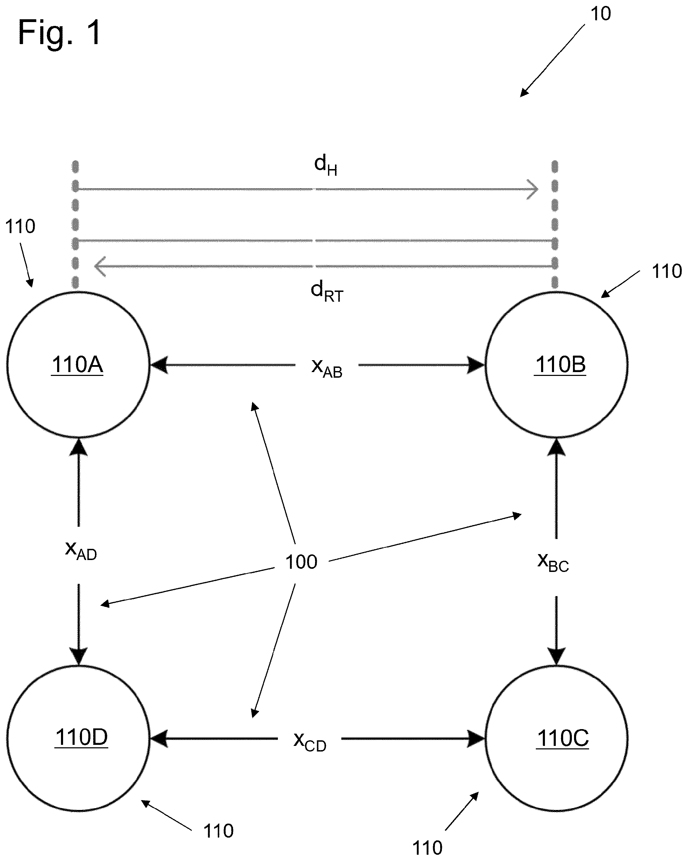

In Fig. 1 ist ein Ausführungsbeispiel eines synchronisierten Datennetzwerk-Systems 10 gemäß der Erfindung gezeigt. Das synchronisierte Datennetzwerk-System 10 weist ein Datennetzwerk 100 auf, das Datennetzwerk-Knoten 110 miteinander über direkte Datenübertragungsstrecken x zwischen benachbarten Datennetz-Knoten 110 zum Zwecke des Datenaustauschs verbindet. In dem gezeigten Ausführungsbeispiel der Erfindung gemäß Fig. 1 werden also die Datennetzwerk-Knoten 110A, 110B, 110C und 110D in einer Ringstruktur miteinander über die direkten Datenübertragungsstrecken $x_{AB}$, $x_{BC}$, $x_{CD}$, $x_{AD}$ miteinander verbunden. Obwohl das Datennetzwerk-System 10 in Fig. 1 eine Ringstruktur aufweist, ist es jedoch auch möglich, als Datennetzwerk-System 10 ein Datennetzwerk 100 vorzusehen, das eine Stern- oder Netzstruktur aufweist. Die Erfindung kann auf jeder Netzwerktopologie ausgeführt werden und ist daher nicht auf eine bestimmte Netzwerkstruktur beschränkt. Die Topologie der Netzwerkstruktur ist also frei, einzige Voraussetzung ist die Bidirektionalität der Verbindungen zwischen den Knoten und dass wenigstens ein Knoten über mehr als eine Schnittstelle zu Nachbarknoten verfügen muss, um eine Topologie mit mehr als zwei Teilnehmern erzeugen zu können. Auch die Anzahl der Datennetzwerk-Knoten 110 ist beliebig, die in der Fig. 1 dargestellten vier Datennetzwerk-Knoten 110A, 110B, 110C und 110D sind als reines Beispiel aufzufassen.

In dem Datennetzwerk-System 10 werden vorzugsweise als Datennetzwerk-Knoten 110 vorgefertigte Avionik-Komponenten vorgesehen, um ein Avioniksystem-Datennetzwerk zur Verfügung zu stellen, über welches eine deterministische und potenziell flugsicherheitsrelevante Kommunikation zwischen den Avionik-Komponenten als Datennetzwerk-Knoten ermöglicht ist. Solch eine deterministische Kommunikation ist insbesondere in Flugnetzwerken oder beim Einsatz von autonomen Flug- oder Fahranwendungen unerlässlich, da eine synchronisierte Kommunikation und eine Nachvollziehbarkeit von Kausalketten in einem Avioniksystem insbesondere für den Flugsicherheitsnachweis und natürlich für die Flugsicherheit selbst benötigt wird. Dabei kommen diese Systeme dann zum Einsatz, wenn es um den Erhalt von Menschenleben, um die Erfüllung einer militärischen Mission oder um den Transport hoher Sachwerte geht. Als Avionikkomponenten, die als Datennetzwerk-Knoten 110 im Sinne der Erfindung zum Einsatz kommen, sind eine Vielzahl von Avionikkomponenten denkbar, wie Rechnersysteme zur Flugleitung oder Missionsverwaltung, Mensch-Maschine-Schnittstellen wie Anzeige- oder Eingabegeräte, Fluglagesensoren, Triebwerksensorik und Aktuatorik, Leitwerksensorik und Aktuatorik- oder Waffensysteme, bei welchen über das synchronisierte Datennetzwerk-System Waffen ausgelöst oder Täuschkörper abgesetzt werden können. Obwohl ein Einsatz in der Avionik besonders bevorzugt ist, soll der Einsatz des Synchronisierten Datennetzwerk-Systems gemäß der Erfindung nicht darauf beschränkt sein, sondern kann beispielsweise im Bereich der Nautik, der Raumfahrt wie bei Satellitensystemen oder bei sicherheitsrelevanten Großanlagen eingesetzt werden.

In dem Datennetzwerk-System 10 gemäß der Erfindung kann die direkte Datenübertragungsstrecke x zwischen zwei Datennetzwerk-Knoten 110 eine bidirektionale oder eine Dual-Simplex-Kommunikation ermöglichen. Das zeitliche Verhalten von Daten, die durch das Netzwerk 100 geschickt werden, wird hauptsächlich durch eine unidirektionale Hop-Latenz $d_H$ und eine kombinierte Umlauf-Latenz $d_{RT}$ charakterisiert, welche für jeden Link von externen Faktoren wie beispielsweise dem physikalischen Medium oder den Umweltbedingungen und internen Faktoren wie dem Design oder der Implementierung des Datennetzwerk-Knotens 110 abhängt.

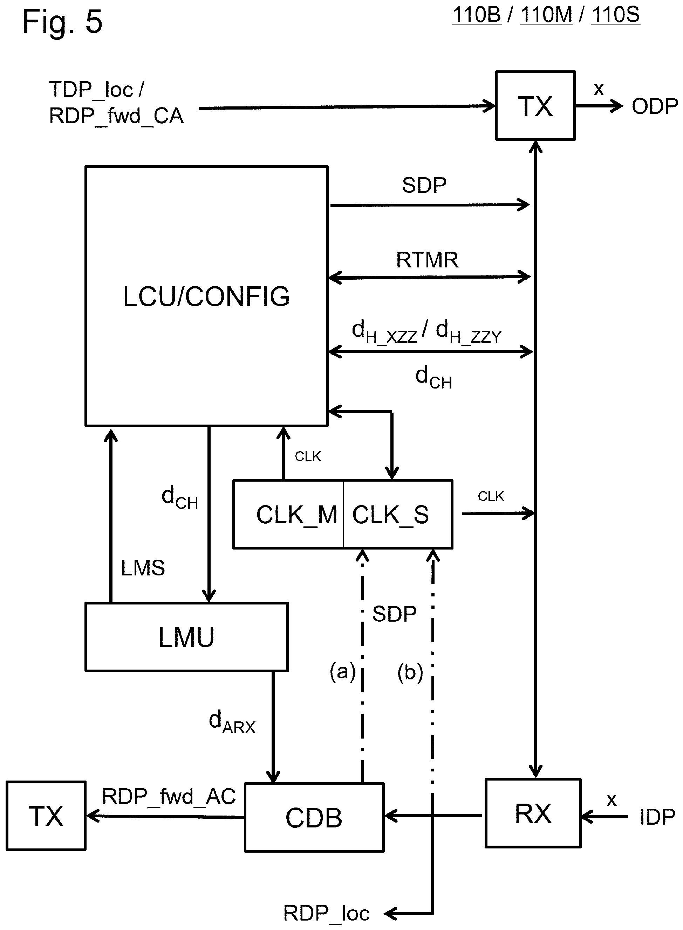

Aufgrund der Variation der Hop-Latenzen $d_H$ über das Datennetzwerk-System 10 hinweg ist die Laufzeit für die Übertragung von Datenpaketen von einem Quellen-Datennetzwerk-Knoten 110 zu einem Endempfänger-Datennetzwerk-Knoten 110 keine direkte Funktion der durch das Datennetzwerk 100 gewählten Datenweiterleitungsstrecke und der Anzahl der Hops auf dieser Datenweiterleitungsstrecke. Vielmehr ist es nötig, dass alle spezifischen Latenzen, die durch externe oder interne Faktoren des Netzwerks entstehen, in Betracht gezogen werden, was einen enormen Rechenaufwand bedeutet, wenn man das Datennetzwerk-System 10 implizit synchronisieren will. Hierbei bedeutet eine implizite Synchronisierung eine Synchronisierung aller Netzwerkknoten-Nebenuhren auf eine Hauptuhr eines Master-Datennetzwerk-Knotens 110M (Fig. 5) durch Versenden von Synchronisierungsdatenpaketen von dem Master-Datennetzwerk-Knotens 110M zu den Datennetzwerk-Knoten 110.

Ferner ist eine solche Synchronisierung nicht nur rechenaufwändig, sondern auch abhängig von einer Laufzeitinitialisierung und hat damit auch Einfluss auf den Determinismus des Systems, da es Toleranzen über den gesamten laufzeitabhängigen Wertebereich erfordert.

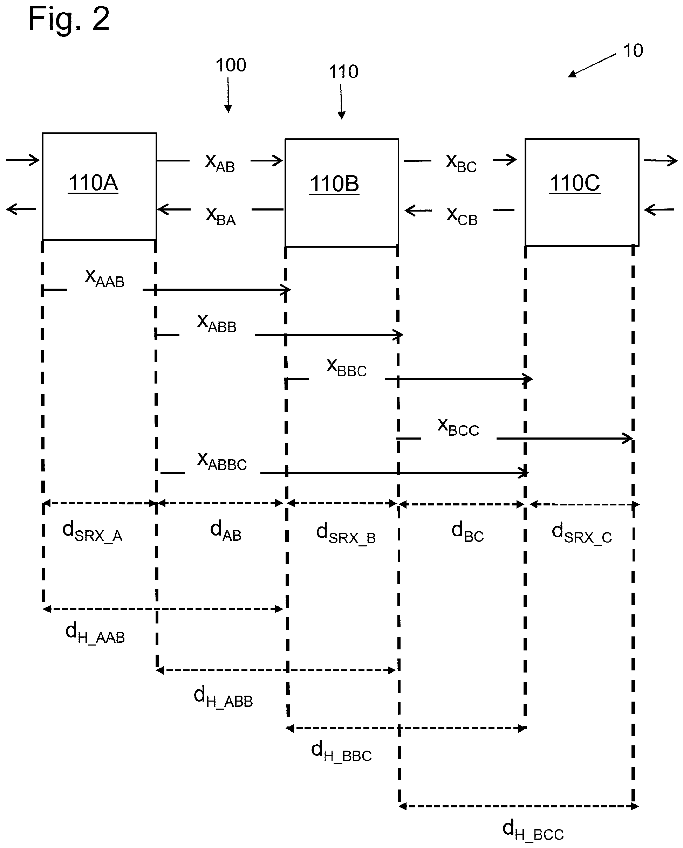

In Fig. 2 ist das synchronisierte Datennetzwerk-System 10 gemäß der Erfindung noch weiter im Detail gezeigt, wobei hier noch genauer auf die verschiedenen Latenzen, die entweder durch die Datennetzwerk-Knoten 110 oder durch die direkten Datenübertragungsstrecken x erzeugt werden, genauer eingegangen wird. Fig. 2 zeigt eine Knotenkette der Datennetzwerk-Knoten 110 gemäß der Erfindung aus einem aufeinanderfolgenden ersten, zweiten und dritten Datennetzwerk-Knoten 110A, 110B und 110C, die bei einer Übertragung von Daten von dem Datennetzwerk-Knoten 110A zu dem Datennetzwerk-Knoten 110C über direkte Datenübertragungsstrecken $x_{AB}$ und $x_{BC}$ miteinander verbunden sind. Eine bidirektionale Kommunikation ist ebenfalls möglich, über die direkten Übertragungsstrecken $x_{CB}$ und $x_{BA}$, es soll jedoch aus Einfachheitsgründen nur die Weiterleitungsrichtung von dem Knoten 110A bis 110C betrachtet werden.

Der zweite Datennetzwerk-Knoten 110B ist gemäß der Erfindung dazu angepasst, auf einer Datenweiterleitungsstrecke $x_{ABBC}$ von dem ersten Datennetzwerk-Knoten 110A auf der ersten direkten Datenübertragungsstrecke $x_{AB}$ zwischen dem ersten und dem zweiten Datennetzwerk-Knoten 110A, 110B gesendete Daten zu empfangen und auf einer zweiten direkten Datenübertragungsstrecke $x_{BC}$ zwischen dem zweiten und dem dritten Datennetzwerk-Knoten 110B, 110C an den dritten Datennetzwerk-Knoten 110C weiterzuleiten.

Gemäß der Erfindung soll also unterschieden werden zwischen der direkten Datenübertragungsstrecke x, welche Teil des Datennetzwerks 100 ist und einer Datenweiterleitungsstrecke $x_{ABBC}$, welche auch die Übertragungsstrecke durch einen Datennetzwerk-Knoten 110 hindurch mit einer entsprechenden intrinsischen Knotenlatenz umfasst.

Insbesondere sind für die Erfindung die Ein-Hop-Datenweiterleitungsstrecken $x_{AAB}$, $x_{ABB}$, $x_{BBC}$, $x_{BCC}$ oder im Folgenden auch ganz allgemein als $x_{XZZ}$ oder $x_{ZZY}$ interessant, da sie die kleinste Einheit eines Datenweiterleitungssprungs oder Hops von einem Datennetzwerk-Knoten 110 zu einem anderen Datennetzwerk-Knoten 110 ist. Für die Definition einer Ein-Hop-Datenweiterleitungsstrecke gibt es zwei mögliche Betrachtungsweisen:

(a) Die Ein-Hop-Datenweiterleitungsstrecke kann so definiert werden, dass sie den Datenweiterleitungsstrecken $x_{ABB}$ und $x_{BCC}$ entspricht. Hier wird also die direkte Datenübertragungsstrecke $x_{AB}$ von dem Sender-Datennetzwerk-Knoten 110A zu dem weiterleitenden Datennetzwerk-Knoten 110B sowie die Datenweiterleitungsstrecke durch den Datennetzwerk-Knoten 110B hindurch als Ein-Hop-Datenweiterleitungsstrecke zusammengefasst. Im Falle, dass der Datennetzwerk-Knoten 110C der weiterleitende Datennetzwerk-Knoten 110 ist, werden die direkte Datenübertragungsstrecke $x_{BC}$ und der Datenweiterleitungsstrecke durch den Datennetzwerk-Knoten 110C hindurch als Ein-Hop-Datenweiterleitungsstrecke $x_{BCC}$ zusammengefasst. Für den Fall also, dass der zweite Datennetzwerk-Knoten 110B der weiterleitende Datennetzwerk-Knoten 110 ist, entspricht die Ein-Hop-Datenweiterleitungsstrecke einer Datenweiterleitungsstrecke $x_{ABB}$, die beginnend an der Senderseite des ersten Datennetzwerk-Knotens 110A über die direkte Datenübertragungsstrecke $x_{AB}$ zwischen dem ersten und dem zweiten Datennetzwerk-Knoten 110A, 110B durch den zweiten Datennetzwerk-Knoten 110B hindurch und endend an der Senderseite des zweiten Datennetzwerk-Knotens 110B verläuft.

(b) Gemäß einem zweiten Ausführungsbeispiel besteht die Ein-Hop-Datenweiterleitungsstrecke $x_{AAB}$, $x_{BBC}$ aus der Weiterleitungsstrecke mit entsprechender Latenz des weiterleitenden Knotens 110 und der darauffolgenden direkten Datenübertragungsstrecke $x_{AB}$, $x_{BC}$, über die die Daten, ausgehend von dem weiterleitenden Datennetzwerk-Knoten 110A, 110B zu einem entsprechenden weiteren Datennetzwerk-Knoten 110B, 110C gesendet werden. Dies bedeutet also, dass für den Fall, dass der zweite Datennetzwerk-Knoten 110B der datenweiterleitende Datennetzwerk-Knoten ist, dass die Ein-Hop-Datenweiterleitungsstrecke der Datenweiterleitungsstrecke $x_{BBC}$ entspricht, die beginnend an der Empfängerseite des zweiten Datennetzwerk-Knotens 110B durch den zweiten Daten-Netzwerk-Knoten 110B hindurch und über die direkte Datenübertragungsstrecke $x_{BC}$ zwischen dem zweiten und dritten Datennetzwerk-Knoten 110B, 110C endend an der Empfängerseite des dritten Datennetzwerk-Knotens 110C verläuft.

Wie aus Fig. 2 weiter ersichtlich, sind den entsprechenden Weiterleitungsstrecken durch die Datennetzwerk-Knoten 110 hindurch und durch die direkten Datenübertragungsstrecken x entsprechende Latenzen zugeordnet, die entweder die Laufzeit oder Latenz bei einer Datenweiterleitung durch den Datennetzwerk-Knoten 110 hindurch $d_{SRX\_A}$, $d_{SRX\_B}$, $d_{SRX\_C}$ oder die Laufzeit oder Latenz bei der Weiterleitung über die direkten Datenübertragungsstrecken $x_{AB}$ und $x_{BC}$ mit den Latenzen $d_{AB}$ und $d_{BC}$ betreffen.

Hinsichtlich der Ein-Hop-Datenweiterleitungsstrecken ergeben sich entsprechend aus der Summe der intrinsischen Knotenlatenz $d_{SRX}$ und der Übertragungslatenz über die direkten Datenweiterleitungsstrecken x die Hop-Latenzen $d_{H\_AAB}$, $d_{H\_ABB}$, $d_{H\_BBC}$ und $d_{H\_BCC}$. Obwohl die Hop-Latenzen in Fig. 2 alle gleich groß dargestellt sind, tritt bei einem vorbekannten Datennetzwerk-System 10 gerade hier das Problem auf, dass durch die Varianz der intrinsischen Knotenlatenzen und der Übertragungslatenzen eine implizite Synchronisierung des Datennetzwerk-Systems 10 sehr aufwändig wird.

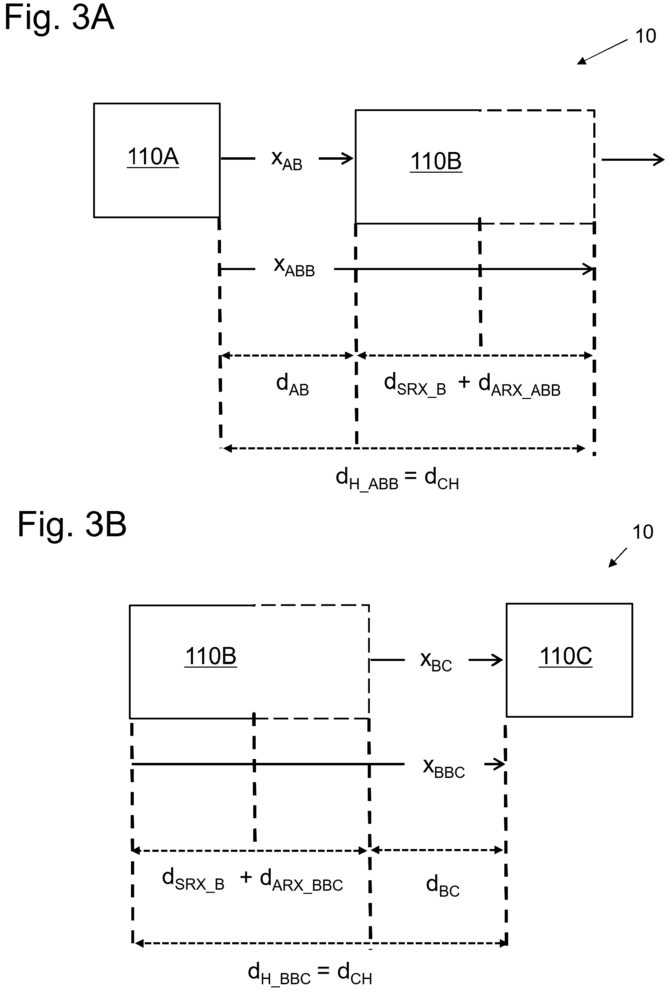

Dieses Problem wird jedoch durch das erfindungsgemäße synchronisierte Daten-Netzwerksystem 10 überwunden, wie beispielsweise in den Fig. 3A und 3B illustriert wird. Fig. 3A zeigt hierbei eine Detailansicht aus Fig. 2, wobei hier eine Verzögerung der Datenweiterleitung gemäß einem ersten Ausführungsbeispiel stattfindet, wobei der in Fig. 3B gezeigte Ausschnitt der Fig. 2 eine Verzögerung der Datenweiterleitung gemäß dem zweiten Ausführungsbeispiel der Erfindung darstellt.

Wie in Fig. 3A gezeigt, ist der zweite Datennetzwerk-Knoten 110B dazu angepasst, eine Weiterleitung der Daten auf einer Ein-Hop-Datenweiterleitungsstrecke $x_{ABB}$ zwischen erstem und drittem Datennetzwerkknoten 110A, 110C so zu verzögern, dass die Hop-Latenz $d_{H\_ABB}$ gleich einer vorbestimmten festen gemeinsamen Hop-Latenz $d_{CH}$ ist. Hierbei entspricht die Ein-Hop-Datenweiterleitungsstrecke einer Datenweiterleitungsstrecke $x_{ABB}$, die beginnend an der Senderseite des ersten Datennetzwerk-Knotens 110A über die direkte Datenübertragungsstrecke $x_{AB}$ zwischen dem ersten und dem zweiten Datennetzwerk-Knoten 110A, 110B durch den zweiten Datennetzwerk-Knoten 110B hindurch und endend an der Senderseite des zweiten Datennetzwerk-Knotens 110B verläuft.

In Fig. 3B ist der zweite Datennetzwerk-Knoten 110B dazu angepasst, eine Weiterleitung der Daten auf einer Ein-Hop-Datenweiterleitungsstrecke $x_{BBC}$ zwischen ersten und dritten Datennetzwerk-Knoten 110A, 110C so zu verzögern, dass die Hop-Latenz $d_{H\_BBC}$ gleich einer vorbestimmten festen gemeinsamen Hop-Latenz $d_{CH}$ ist. Die Ein-Hop-Datenweiterleitungsstrecke entspricht dabei einer Datenweiterleitungsstrecke $x_{BBC}$, die beginnend an der Empfängerseite des zweiten Datennetzwerk-Knotens 110B durch den zweiten Daten-netzwerk-Knoten 110B hindurch und über die direkte Datenübertragungsstrecke $x_{BC}$ zwischen dem zweiten und dritten Datennetzwerk-Knoten 110B, 110C endend an der Empfängerseite des dritten Datennetzwerk-Knotens 110C verläuft.

Auch wenn aus Gründen der Vollständigkeit beide Ausführungsbeispiele (a) (Fig. 3A) und (b) (Fig. 3B) behandelt werden, ist das erste Ausführungsbeispiel (a) bevorzugt, da die reale Umsetzung des zweiten Ausführungsbeispiels (b) etwas schwieriger ist. Insbesondere müssen bei dem zweiten Ausführungsbeispiel in Fig. 3B ausgehende lokal generierte Pakete im RX-Pfad des zweiten Datennetzwerk-Knotens 110B erzeugt, zeitgestempelt (time-stamped) sowie zum Sende-Link TX des zweiten Datennetzwerk-Knotens 110B hin verzögert werden. Dies verzögert auch Datentransfers zwischen benachbarten Knoten 110, die nicht verzögert werden müssten (siehe hierzu auch die Pfade IDP -> RDP_loc und IDP -> RDP_fwd_AC in Fig. 5).

Gemäß der Erfindung wird also die intrinsische Knotenlatenz $d_{SRX\_B}$ mittels einer Verzögerungsschaltung in einen weiterleitenden Daten-Netzwerk-Knoten 110 um eine variable Knotenlatenz $d_{AX\_ABB}$ oder $d_{AX\_BBC}$ so verlängert, dass unabhängig von den Datenübertragungsstreckenlatenzen $d_{AB}$ oder $d_{BC}$ und unabhängig von der intrinsischen Knotenlatenz $d_{SRX\_B}$ bei einem Weiterleitungs-Hop durch den zweiten Datennetzwerk-Knoten 110B hindurch die Weiterleitungslaufzeit oder die Weiterleitungslatenz oder die Ein-Hop-Datenweiterleitungslatenz $d_{H\_ABB}$ oder $d_{H\_BBC}$ immer gleich ist einer vorbestimmten gemeinsamen Hop-Latenz $d_{CH}$, egal welcher Datennetzwerk-Knoten 110 oder welche zugehörige direkte Datenübertragungsstrecke x einer ausgewählten Ein-Hop-Datenweiterleitungsstrecke gewählt ist in dem synchronisierten Datennetzwerksystem 10 gemäß der Erfindung.

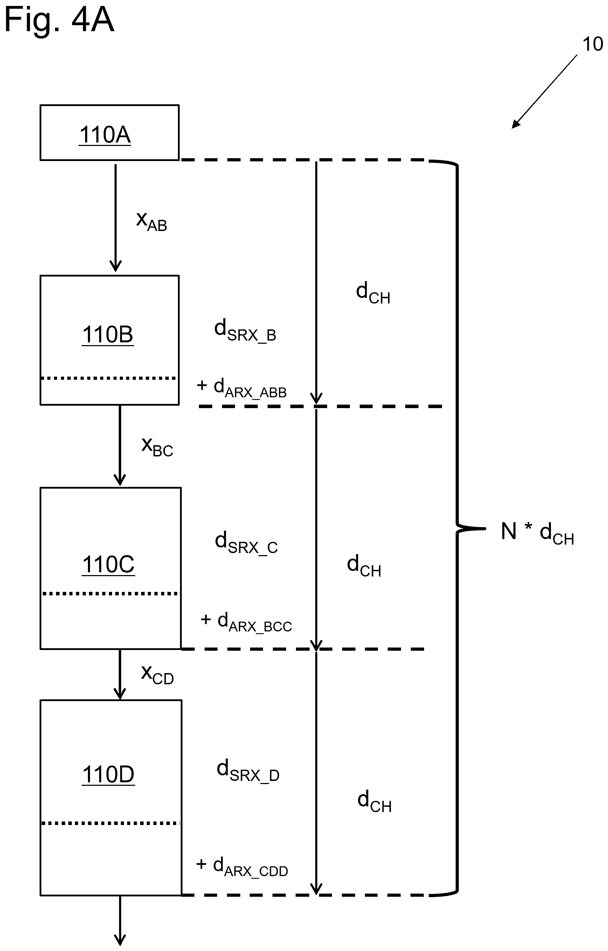

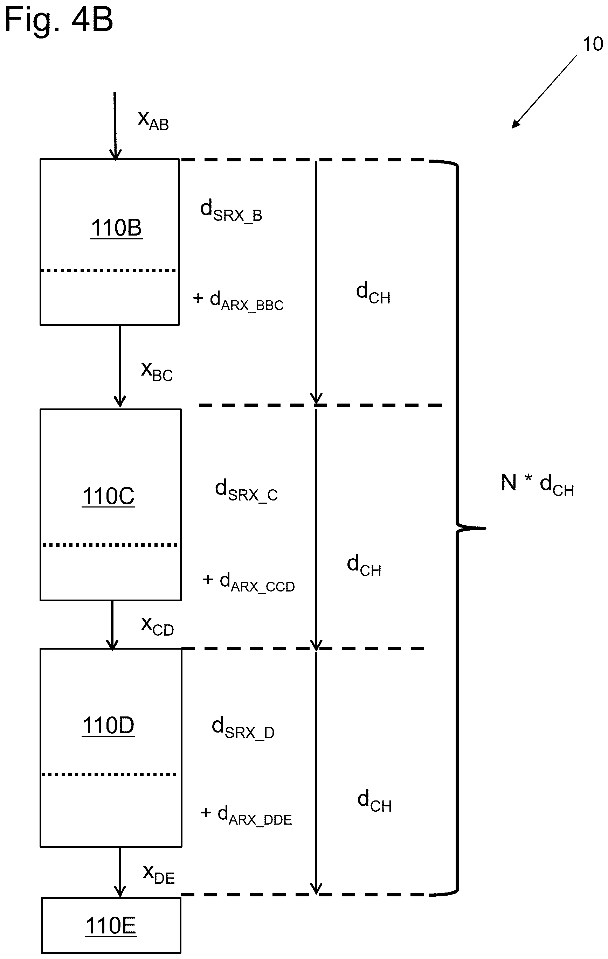

Durch die Verzögerungsschaltung in dem zweiten Netzwerk-Knoten 110B und allen anderen weiterleitenden Daten-Netzwerk-Knoten 110 wird zwar die Datenübertragung in dem Datennetzwerk-System 10 gemäß der Erfindung verzögert, jedoch wird durch diese Vorgehensweise eine Synchronisierung des gesamten Datennetzwerk-Systems 10 extrem vereinfacht. Dies ist in der Fig. 4A für das erste Ausführungsbeispiel der Erfindung und in Fig. 4B für das zweite Ausführungsbeispiel der Erfindung illustriert.

So kann eine Synchronisierung des Datennetzwerk-Systems 10 gemäß der Erfindung beispielsweise dadurch erfolgen, dass mittels eines Master-Datennetzwerk-Knotens 110M (Fig. 5) entsprechende Slave-Datennetzwerk-Knoten 110S des Datennetzwerk-Systems 10 auf eine Hauptuhr CLK_M (Fig. 5) synchronisiert werden. Hierzu ist der Master-Datennetzwerk-Knoten 110M dazu angepasst, in periodischen Abständen oder bei Instruktion durch einen Benutzer Synchronisierungsdatenpakete SDP mit einem Hauptuhr-Zeitstempel $t_{tx}$ an Slave-Datennetzwerk-Knoten 110S zu versenden und die Nebenuhren CLK_S der Slave-Datennetzwerk-Knoten 110S entsprechend der vollzogenen Anzahl an Hops h des Synchronisierungsdatenpakets SDP zwischen Master-Datennetzwerk-Knoten 110M und jeweiligen Slave-Datennetzwerk-Knoten 110S sowie mittels der gemeinsamen Hop-Latenzdauer $d_{CH}$ gemäß der Formel $t_{master} = t_{tx} + d_{CH} * h$ mit der Hauptuhrzeit des Master-Datennetzwerk-Knotens 110M zu synchronisieren.

Eine Synchronisierung mit dieser einfachen obigen Formel wird dadurch ermöglicht, dass, wie in den Fig. 4A und 4B gezeigt, eine Weiterleitung eines Synchronisierungsdatenpakets SDP von den Daten-netzwerk-Knoten 110A bis 110D (Fig. 4A) oder von den Datennetzwerk-Knoten 110B bis 110E (Fig. 4B) eine klar definierte Zeitdauer von dem Master-Datenn-zwerk-Knoten 110M zu einem zu synchronisierenden Slave-Datennetzwerk-Knoten 110S hat, nämlich die Anzahl der Hops von dem Master-Datennetzwerk-Knoten 110M bis zu dem jeweiligen Slave-Datennetzwerk-Knoten 110S mal der vorbestimmten festen gemeinsamen Hop-Latenz $d_{CH}$. Dabei können die Datenübertragungsstrecken $x_{AB}$, $x_{BC}$, $x_{CD}$, $x_{DE}$ verschiedenster Natur sein, wobei neben einer beispielsweise kabelgebundenen oder drahtgebundenen Verbindung oder einer Glasfaserverbindung auch eine kabellose oder drahtlose Funkverbindung für eine direkte Datenübertragungsstrecke x möglich ist. Ferner können die intrinsischen Knotenlatenzen $d_{SRX}$ ebenfalls unterschiedlich sein, da bei einer Datenweiterleitung eine Hop-Latenz unabhängig von der Wahl des Datennetzwerk-Knotens 110 immer auf eine gemeinsame vorbestimmte feste Hop-Latenz $d_{CH}$ angeglichen oder nivelliert wird.

Es wird betont, dass obwohl die erfindungsgemäße Synchronisierung des Datennetzwerk-Systems 10 mittels eines Master-Datennetzwerk-Knotens 110M bevorzugt ist, eine Synchronisierung auch in einem dezentralen Datennetzwerk-System erfolgen kann, falls mehrere Netzwerk-Knoten mit als Hauptuhr tauglichen Uhren ausgestattet sind. Es ist auch beispielsweise denkbar, dass nicht nur ein Master-Datennetzwerkknoten 110M vorgesehen ist, sondern dass eine Vielzahl der Daten-netzwerk-Knoten 110 oder auch alle Datennetzwerk-Knoten 110 als Master-Datennetzwerk-Knoten 110M arbeiten können, wodurch die Ausfallsicherheit und die Redundanz des synchronisierten Datennetzwerk-Systems 10 gemäß der Erfindung maximiert wird. In diesem Falle muss lediglich eine entsprechende Abstimmung zwischen dem Datennetzwerk-Knoten 110 erfolgen, dass nicht zwei Datennetzwerk-Knoten 110 zur gleichen Zeit die Master-Rolle ausführen.

Mittels dem erfindungsgemäßen Synchronisierungsverfahren ist es also möglich, mittels einer für alle Datennetzwerk-Knoten und entsprechende Weiterleitungsstrecken gleiche und gemeinsame Hop-Latenz für alle Verbindungen in einem geschlossenen Netzwerk in einfacher Weise eine Synchronisierung aller Daten-netzwerk-Knoten zu erreichen.

In Fig. 5 ist ein Blockdiagramm eines Daten-

netzwerk-Knotens 110 gemäß der Erfindung gezeigt. Hierbei umfasst beispielsweise der zweiten Datennetzwerk-Knoten 110B eine Datensendeeinheit TX, welche mit einer direkten Datenübertragungsstrecke x verbunden ist, um Daten ODP zu weiteren Datennetzwerk-Knoten 110 zu senden, die entweder lokal generierte zu sendende Datenpakete TDP_loc oder weitergeleitete zu sendende Datenpakete RDP_fwd sind. Der zweite Datennetzwerk-Knoten 110B umfasst ferner eine Datenempfangseinheit RX, welche mit einer direkten Datenübertragungsstrecke x verbunden ist, um Daten IDP von weiteren Datennetzwerk-Knoten 110 zu empfangen. Wie in Fig. 5 gezeigt, weist der zweite Datennetzwerk-Knoten 110B ferner eine Latenzabgleichseinheit (engl. "Latency Matching Unit) LMU auf, die dazu angepasst ist, mittels einer gespeicherten spezifischen Hop-Latenz $d_{H\_ABB}$, $d_{H\_BBC}$ der aktuellen Ein-Hop-Datenweiterleitungsstrecke $x_{ABB}$, $x_{BBC}$ und mittels der vorbestimmten festen gemeinsamen Hop-Latenzdauer $d_{CH}$ eine für die aktuelle Ein-Hop-Datenweiterleitungsstrecke $x_{ABB}$, $x_{BBC}$ spezifische Latenzabgleichsdauer $d_{ARX}$ zu errechnen. Im Falle einer Weiterleitung von Datenpaketen IDP von der Datenempfangseinheit RX über die Datensendeeinheit TX an weitere Datennetzwerk-Knoten 110 läuft das Datenpaket RDP_fwd (bspw. RDP_fwd_AC oder RDP_fwd_CA) durch einen zwischen der Datenempfangseinheit RX und einer zur Weiterleitung bestimmten Datensendeeinheit TX zwischengeschalteten Verzögerungspuffer CDB, um die Weiterleitung von Datenpaketen RDP_fwd_AC auf der aktuellen Ein-Hop-Datenweiterleitungsstrecke $x_{ABB}$, $x_{BBC}$ um die von der Datenlatenzabgleichseinheit LMU empfangene spezifische Latenzabgleichsdauer $d_{ARX}$ zu verzögern.

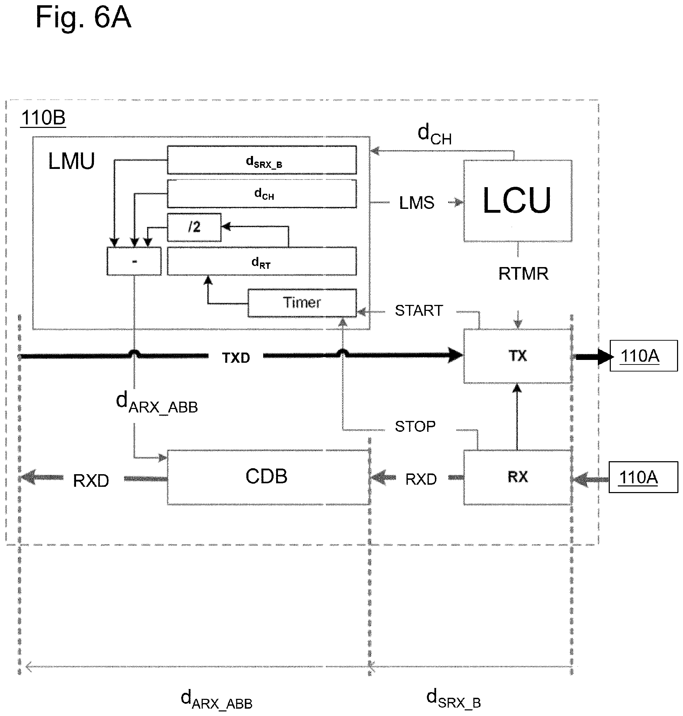

Der Aufbau der Latenzabgleichseinheit LMU ist in Fig. 6A gezeigt. Diese weist einen Timer zum Messen einer Umlauf-Latenz $d_{RT}$ auf einer zu vermessenden Ein-Hop-Datenweiterleitungsstrecke $x_{ABB}$, $x_{BBC}$ sowie einen Speicher zum Speichern der intrinsischen Knotenlatenz $d_{SRX\_B}$, der Umlauf-Latenzen $d_{RT}$ der Ein-Hop-Datenweiterleitungsstrecken $x_{ABB}$, $x_{BBC}$ des zweiten Datennetzwerk-Knotens 110B sowie der vorbestimmten festen gemeinsamen Hop-Latenz $d_{CH}$ auf. Des Weiteren weist die Latenzabgleichseinheit LMU eine Recheneinheit auf, welche dazu angepasst ist, die für eine Ein-Hop-Datenweiterleitungsstrecke spezifische Latenzabgleichsdauer $d_{ARX\_ABB}$ über die Formel $d_{ARX} = d_{CH} - d_{RT}/2 - d_{SRX\_B}$ zu errechnen.

Wie in Fig. 5 gezeigt, findet eine Verzögerung der Datenpakete lediglich dann statt, wenn diese zur Weiterleitung vorgesehen sind, während hingegen empfangene Datenpakete RDP_loc, die keine Synchronisierungsdatenpakete sind und zur lokalen Weiterverarbeitung in dem entsprechenden zweiten Datennetzwerkknoten 110B vorgesehen sind, nicht verzögert werden. Somit ist also die konfigurierbare Verzögerung der Datenweiterleitung vorzugsweise gemäß dem ersten Ausführungsbeispiel auf der Empfängerseite jedes Knotens vorgesehen, ausschließlich für Pakete, die nicht ihre Zieladresse erreicht haben und welche zu der Datensendeeinheit TX zur Weiterleitung von der Datenempfängereinheit zur Datensendeeinheit weitergeschickt werden. Auf diese Weise können Pakete, welche lokal weiterverarbeitet werden, zeitnah und direkt ohne weitere Verzögerung zum Endverbraucher geschickt werden, im Gegensatz zu einer Implementierung gemäß dem zweiten Ausführungsbeispiel der Erfindung, bei welcher eine Verzögerung auf Senderseite für die zu überwindende Weiterleitungsstrecke bis zum nächsten Datennetzwerk-Knoten 110 erfolgt.

Wie in Fig. 5 weiter gezeigt, weist der zweite Datennetzwerk-Knoten 110B entweder eine Hauptuhr CLK_M oder eine Nebenuhr CLK_S auf, je nachdem, ob der zweite Datennetzwerk-Knoten 110B als Master-Datennetzwerk-Knoten 110M oder als Slave-Datennetzwerk-Knoten 110S arbeitet. Für den Fall, dass der zweite Datennetzwerk-Knoten 110B als Slave-Datennetzwerk-Knoten 110S arbeitet, wird die Nebenuhr CLK_S durch ein Synchronisierungsdatenpaket SDP entweder ohne Verzögerung nach Empfang gemäß dem zweiten Ausführungsbeispiel oder nach einer Verzögerung durch die Verzögerungspuffer CDB gemäß dem ersten Ausführungsbeispiel mit der Hauptuhr CLK_M eines anderen Master-Datennetzwerk-Knotens 110M synchronisiert. Der zweite Datennetzwerk-Knoten 110B weist darüber hinaus eine Kommunikations-Steuereinheit LCU/CONFIG zur Steuerung einer Initialisierung und Synchronisierung auf, wobei die Kommunikations-Steuereinheit LCU/CONFIG eine Initialisierungssteuereinheit LCU, die den Initialisierungsprozess der Datennetzwerk-Knoten 110 steuert und eine Synchronisierungssteuereinheit CONFIG, die die Synchronisierung der Datennetzwerk-Knoten 110 steuert, umfasst.

Im Folgenden soll ein Initialisierungsvorgang des synchronisierten Datennetzwerk-Systems gemäß der Erfindung und danach ein Synchronisierungsvorgang des erfindungsgemäßen Datennetzwerks 10 beschrieben werden.

Während der Netzwerkinitialisierung werden alle Knoten in dem Netzwerk dazu aufgefordert, selbstständig die Latenzen auf allen Datenübertragungsstrecken zu ihren Nachbarknoten in dem Netzwerk zu bestimmen. Die Datennetzwerk-Knoten-Schnittstellenimplementierung muss hierbei symmetrisch oder mit einer bekannten Asymmetrie, die von den benachbarten Knoten miteinbezogen wird, erfolgen. Somit kann die Hop-Latenz aus einer Umlauf-Latenzmessung korrekt abgeleitet werden. Bevor die Netzwerkinitialisierung abgeschlossen ist, wird jeder einzelne Knoten dann aufgefordert, eine zusätzliche Verzögerung oder eine spezifische Latenzabgleichsdauer $d_{ARX}$ in dem Datenempfangspfad in Verbindung mit allen Datenübertragungsstrecken und Verbindungen zu dem Nachbarknoten einzufügen, so dass die resultierende Hop-Latenz auf all diesen Verbindungsstrecken einem konfigurierbaren gemeinsamen Wert für das gesamte Netzwerk entspricht, wobei dieser Wert vor Inbetriebnahme des Netzwerks aus allen Ein-Hop-Datenweiterleitungslatenzen bestimmt wird. Dieser Wert ist die vorbestimmte feste gemeinsame Hop-Latenz $d_{CH}$ oder auch gemeinsame deterministische Hop-Latenz $d_{CH}$.

An dieser Stelle soll betont werden, dass die Initialisierung des Netzwerks vollständig dezentral abläuft und die Unterscheidung zwischen Slave-Datennetzwerk-Knoten 110S und Master-Datennetzwerk-Knoten 110M zunächst keine Rolle spielt, da auch der spätere Master-Datennetzwerk-Knoten 110M zunächst als Slave-Datennetzwerk-Knoten 110S den gleichen Initialisierungsprozess durchläuft wie alle anderen Datennetzwerk-Knoten 110. Hierbei ermitteln also alle Knoten als Teil der Netzwerkinitialisierung die Umlauflatenz zu ihren Nachbarn (generieren Anfragen, erhalten Antwort, sowie erhalten Anfragen und generieren Antworten). Hier gibt es keine Rollen und alle Knoten sind gleich. Sobald jeder Knoten die notwendige Information ermittelt hat, wird die Ziellatenz eingestellt und die Initialisierungsphase endet. Durch die einheitliche Hop-Latenz wird dann implizite Zeitsynchronisation einfach dadurch möglich, dass der definierte Master mit allen anderen Knoten regelmäßig kommuniziert (unidirektional, keine Antwort nötig).

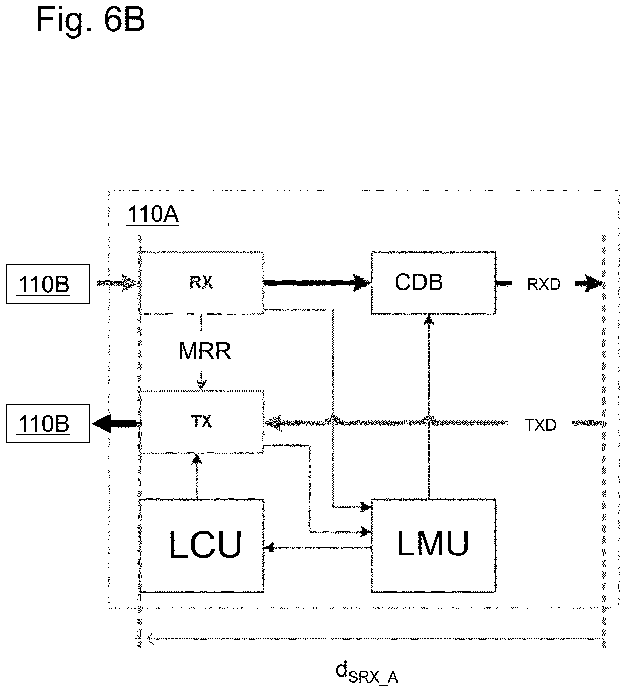

Im Detail läuft die Initialisierung aus Sicht des zweiten Datennetzwerk-Knotens 110B in seiner Rolle als Slave-Datennetzwerk-Knoten 110S bei einer beispielsweisen Sondierung der Ein-Hop-Datenweiterleitungsstrecke zu seinem Nachbarknoten 110A folgendermaßen ab, wie in den Fig. 6A und 6B illustriert wird.

So veranlasst die Initialisierungssteuerungseinheit LCU den zweiten Datennetzwerk-Knoten 110B als Slave-Datennetzwerk-Knoten 110S bei einem Initialisierungsvorgang des synchronisierten Datennetzwerk-Systems 10 zu folgenden Schritten. Zunächst wird von der Kommunikations-Steuereinheit LCU ein Umlauf-Latenz-Messbefehl (engl. "Roundtrip Measurement Request") RTMR an die Datensendeeinheit TX gesendet. Danach sendet die Datensendeeinheit TX ein Umlaufsignal oder ein Ping-Signal über eine entsprechende direkte Datenübertragungsstrecke x, in diesem Falle $x_{AB}$, der zu vermessenden beispielsweisen Ein-Hop-Datenweiterleitungsstrecke $x_{ABB}$ im Falle einer Implementierung des ersten Ausführungsbeispiels der Erfindung an eine Datenempfangseinheit RX eines entsprechenden empfangenden Datennetzwerk-Knotens 110A. Bei Versendung des Umlaufsignals wird gleichzeitig der Timer der Latenzabgleichseinheit LMU durch diese gestartet. Das an den Datennetzwerk-Knoten 110A übersandte Umlaufsignal oder Ping-Signal wird von der Datenempfangseinheit RX des Datennetzwerk-Knotens 110A empfangen und mittels eines Messbefehl-Antwortsignals (engl. "Measurement Request Response") MRR (Fig. 6B) über die Datensendeeinheit TX des Datennetzwerk-Knotens 110A wieder direkt an die Empfangseinheit RX des zweiten Datennetzwerk-Knotens 110B zurückgeschickt. Sobald die Datenempfangseinheit RX das von dem entsprechenden ersten Datennetzwerk-Knoten 110A zurückgesandte Umlaufsignal über die entsprechende direkte Datenübertragungsstrecke $x_{AB}$ empfangen hat, wird der Timer durch die Latenzabgleichseinheit LMU bei Empfang dieses zurückgesandten Umlaufsignals gestoppt.

Nach einem Auslesen der Umlauf-Latenz $d_{RT}$ aus dem Timer der Latenzabgleichseinheit LMU, berechnet die Latenzabgleichseinheit LMU die spezifische Hop-Latenz $d_{H\_ABB}$ der in dem Beispiel von Fig. 6A und Fig. 6B zu vermessenden Ein-Hop-Datenweiterleitungsstrecke $x_{ABB}$ durch Addition der intrinsischen Knotenlatenz $d_{SRX\_B}$ zu der halben Umlauf-Latenz $d_{RT}$. Die intrinsische Knotenlatenz $d_{SRX\_B}$ kann durch den zweiten Datennetzwerk-Knoten 110B selbst dadurch ermittelt werden, dass eine interne Weiterleitungslatenz von Datenpaketen von der Datenempfangseinheit RX zu der Datensendeeinheit TX intern vermessen wird. Dieser intrinsische Knotenlatenzwert kann auch bei der Herstellung des teilnehmenden Datennetzwerk-Knotens vermessen und in dem Speicher der Latenzabgleichseinheit LMU abgelegt oder gespeichert werden.

Da für die vollständige Initialisierung des initialisierten Datennetzwerk-Systems 10 der zweite Datennetzwerk-Knoten 110B sämtliche Ein-Hop-Datenweiterleitungsstrecken $x_{XBB}$, $x_{BBY}$ entsprechend dem ersten oder zweiten Ausführungsbeispiel vermessen muss, wird der oben beschriebene Initialisierungsvorgang sooft wiederholt, bis der zweite Datennetzwerk-Knoten 110B sämtliche Ein-Hop-Datenweiterleitungsstrecken zu mit ihm direkt verbundenen Datennetzwerk-Knoten 110 vermessen hat.

Für den Fall, dass während der Verifikationsphase der Plattform bereits eine "worst case" Hop-Latenz ermittelt wird, wird diese dann als vorbestimmte gemeinsame Hop-Latenz $d_{CH}$ jedem Datennetzwerk-Knoten 110 als Konfiguration bekannt gemacht.

Es ist jedoch auch möglich, dass das Netzwerk die gemeinsame Hop-Latenz $d_{CH}$ dynamisch selbst ermittelt, um die Gesamtlatenz zu optimieren. In diesem Falle kann dies beispielsweise über einen Master-Datennetzwerk-Knoten 110M erfolgen, es kann jedoch auch ein externes Lesegerät verwendet werden, dass einmalig an das Netzwerk bei der Initialisierung angeschlossen wird, um alle ermittelten Hop-Latenzen $d_{H\_XZZ}$, $d_{H\_ZZY}$ aller zu vermessenden Ein-Hop-Datenweiterleitungstrecken $x_{XZZ}$, $x_{ZZY}$ aller Datennetzwerk-Knoten 110 auszulesen.

Grundsätzlich findet jedoch kein Austausch der ermittelten Hop-Latenzen zwischen den Knoten statt und es gibt diesbezüglich keine Master/Slave Rollen. Jeder Knoten ist für sich allein dafür verantwortlich, die Umlauflatenz zum Nachbarknoten zu ermitteln und daraus die notwendige Verzögerung zu errechnen, die Weiterleitungspfade durch den lokalen Knoten hindurch zeitlich an eine im System im Voraus etablierte Ziel-Latenz anzupassen.

Nach der vollständigen Vermessung aller Ein-Hop-Datenweiterleitungsstrecken und der damit verbundenen Hop-Latenzen $d_{H\_XBB}$, $d_{H\_BBY}$ aller zu vermessenden Ein-Hop-Datenweiterleitungsstrecken $x_{XBB}$, $x_{BBY}$ können die ermittelten Hop-Latenzen an den Master-Datennetzwerk-Knoten 110M übersandt werden, für den Fall, dass der Master-Datennetzwerk-Knoten 110M für die Bestimmung der gemeinsamen Hop-Latenz $d_{CH}$ vorgesehen ist.

Für den Fall also, dass der zweite Datennetzwerk-Knoten 110B als ein solcher Master-Datennetzwerk-Knoten 110M arbeitet, veranlasst die Initialisierungseinheit LCU den zweiten Datennetzwerk-Knoten 110B als Master-Datennetzwerk-Knoten 110M zu den folgenden Schritten. So empfängt der zweite Datennetzwerk-Knoten 100B von den Slave-Datennetzwerk-Knoten 110S die jeweiligen ermittelten Hop-Latenzen $d_{H\_XZZ}$, $d_{H\_ZZY}$ der zu vermessenden Ein-Hop-Datenweiterleitungsstrecken $x_{XZZ}$, $x_{ZZY}$ aller Slave-Datennetzwerk-Knoten 110S. Nachdem dem Master-Datennetzwerk-Knoten 110M sämtliche Hop-Latenzen aller zu vermessenden Ein-Hop-Datenweiterleitungsstrecken aller Slave-Datennetzwerk-Knoten bekannt sind, wird von dem Master-Datennetzwerk-Knoten 110M eine gemeinsame Hop-Latenz $d_{CH}$ aus den übermittelten Hop-Latenzen festgelegt. Der Master-Datennetzwerk-Knoten 110M ist relativ frei in der Art der Festlegung, es gilt die einzige Bedingung, dass die vorbestimmte feste gemeinsame Hop-Latenz $d_{CH}$ gleich der größten oder größer als alle übermittelten Hop-Latenzen $d_{H\_XZZ}$, $d_{H\_ZZY}$ ist, da sonst zumindest eine übermittelte Hop-Latenz größer als die feste gemeinsame Hop-Latenz $d_{CH}$ wäre und damit eine Synchronisierung im Sinne der Erfindung nicht möglich wäre.

Neben der Tatsache, dass die gemeinsame Hop-Latenz $d_{CH}$ größer als alle Hop-Latenzen aller Ein-Hop-Datenweiterleitungsstrecken im Netzwerk 10 sein muss, ist es darüber hinaus vorteilhaft, wenn die Zeitdauerdifferenz zwischen der festgelegten gemeinsamen Hop-Latenz $d_{CH}$ und der von dem Slave-Datennetzwerk-Knoten 110S übermittelten Hop-Latenzen mit der längsten Zeitdauer so klein wie möglich gewählt wird, um den Datenverkehr innerhalb des synchronisierten Datennetzwerk-Systems 10 nicht unnötig zu verzögern durch eine unnötig große gemeinsame Hop-Latenz $d_{CH}$. So ist eine typische Hop-Latenzzeit in einem Avionik-Datennetzwerk-System 10 gemäß der Erfindung im Bereich von 350 ns, wobei beispielsweise eine festgelegte gemeinsame Hop-Latenz $d_{CH}$ von 500 ns ein akzeptabler Wert für die gemeinsame Hop-Latenz wäre. Es soll betont werden, dass es bei den genannten Zahlen nur um Größenordnungen geht, da nur ein geringer Teil der Latenz durch Kabellängen verursacht wird. Der Großteil der Latenzen wird durch die Transceiver und durch die Implementation der Netzwerkschnittstelle der Knoten eingeführt.

In einer praktischen Umsetzung der Ermittlung der festen gemeinsamen Hop-Latenz $d_{CH}$ kann also die feste gemeinsame Hop-Latenz $d_{CH}$ einer Zeitdauer entsprechen, die gleich einer mit einem Sicherheitsfaktor größer 1 skalierten oder mit einem Sicherheitsoffset beaufschlagten Hop-Latenz $d_{H\_XZZ}$, $d_{H\_ZZY}$ mit der längsten Zeitdauer ist. So kann der Sicherheitsfaktor beispielsweise einem Wert entsprechen, der größer als 1 ist und kleiner als 1,5, kleiner als 1,4, kleiner als 1,3, kleiner als 1,2 oder kleiner als 1,1 oder kleiner als 1,05 ist. Der Sicherheitsoffset kann in einem Bereich zwischen 100 ns und 200 ns liegen. An dieser Stelle sei angemerkt, dass die Kabellängen, wie oben beschrieben, auf den Datenübertragungsstrecken x nur einen geringen Anteil für die Gesamtlatenz bei der Datenübertragung im Netzwerk 10 ausmachen. Der benötigte Bereich hängt von den Laufzeitvariationen (Minimum) und den aufgewendeten Ressourcen für Delay Buffer (Maximum) ab. In jedem Fall fällt die additive Latenz üblicherweise gering aus im Vergleich zu den Latenzen, die bereits durch Transceiver und Kabelstrecken anfallen. Wichtig ist, dass die Kabellänge bei kurzen Übertragungsstrecken (bspw. unter 10m) sehr viel geringeren Einfluss hat als der Aufbau der Schnittstelle und die Transceiver in den Knoten selbst. So wurden bei einer prototypischen Implementierung Gesamtlatenzen für eine Übertragungsstrecke mit 3m Verbindungskabeln von ca. 300ns gemessen, wovon ca. 5ns/m auf die Glasfaser entfallen.

In jedem Fall sollte der Offset so bemessen sein, dass bei einem Umbau des Systems oder bei dem Einfügen von einer zusätzlichen Kabelstrecke von 10 cm bis 50 cm das System nicht wieder komplett neu konfiguriert und initialisiert werden muss. Je größer der Offset gewählt wird, desto robuster ist das Datennetzwerk-System 10 bei einer Veränderung der Komponenten hinsichtlich ihrer Latenzen. Es soll auch hier betont werden, dass diskrete Werte hier wenig Sinn machen. Je größer der Sicherheitsoffset (safety offset), desto größere Längenänderungen sind möglich, vorausgesetzt, die Laufzeitvariation (runtime-variation) ist bekannt.

Der Sicherheitsoffset legt also nur die maximale Kompensationsmöglichkeit fest, was aber nicht heißt, dass diese dann immer ausgeschöpft werden muss. Es kommt vielmehr auf das Zielnetzwerk an. Man kann sogar in einem System, welches Knotenverzögerungen von bis zu 1s variabel ergänzen kann, trotzdem mit einem maximalen Offset von 5ns arbeiten, da alle Knoten sehr geringe Verzögerung aufweisen, die vor Inbetriebnahme so festgestellt wird und als Ziellatenz natürlich dann auch eingestellt wird. Es soll gerade kein dynamisches Optimieren eines Netzwerkes möglich sein, nachdem sich beispielsweise das System geändert hat. Gibt es Änderungen im System, dann muss die gemeinsame Ziellatenz neu ermittelt und an alle Knoten übersendet werden.

Nachdem, wie in Fig. 5 gezeigt, der zweite Datennetzwerk-Knoten 110B als Master-Datennetzwerk-Knoten 110M sämtliche Hop-Latenzen $d_{H\_XZZ}$/$d_{H\_ZZY}$ von den zu vermessenden Ein-Hop-Weiterleitungsstrecken aller Slave-Datennetzwerk-Knoten 110S erhalten, und eine gemeinsame Hop-Latenz $d_{CH}$ bestimmt hat, wird die festgelegte gemeinsame Hop-Latenz $d_{CH}$ an alle Slave-Datennetzwerk-Knoten 110S übermittelt, die dann den Wert $d_{CH}$ in einem Speicher der Latenzabgleichseinheit LMU speichern, nachdem er von der Kommunikationssteuereinheit LCU/CONFIG an diese übermittelt wurde.

Da die Latenzabgleichseinheit LMU nun also sämtliche wichtige Latenzen bei einer Weiterleitung von Datenpaketen gespeichert hat, nämlich die intrinsische Knotenlatenz $d_{SRX\_B}$, die gemeinsame Hop-Latenz $d_{CH}$ und für jede relevante Ein-Hop-Weiterleitungsstrecke, in welchem der zweite Datennetzwerk-Knoten 110B beteiligt sein kann, gespeichert hat, kann die Latenzabgleichseinheit LMU nun abhängig von der Datenweiterleitungsstrecke einen entsprechenden für die Ein-Hop-Datenweiterleitungsstrecke spezifische Abgleichsdauer $d_{ARX}$ berechnen und an den Verzögerungspuffer CDB übermitteln, der dann Datenpakete RDP_fwd entsprechend verzögert. Der Verzögerungspuffer CDB kann hierbei ein normaler FIFO-Puffer (engl. "First-In-First-Out Buffer") sein, der Daten kurz zwischenspeichert und nach einer vorbestimmten Verzögerungsdauer wieder ausliest und weiterleitet. Darüber hinaus steht die Latenzabgleichseinheit LMU mit der Kommunikationssteuereinheit LCU/CONFIG in einer Datenverbindung, um der LCU/CONFIG ihren Latenzabgleichsstatus LMS mitzuteilen.

Im Folgenden soll noch ein Synchronisierungsvorgang des synchronisierten Datennetzwerk-Systems 10 gemäß der Erfindung beschrieben werden.

Da nach dem Initialisierungsvorgang nun die Datenweiterleitungslatenz auf beliebigen Routen durch das Netzwerk als ganze Vielfache der festgelegten gemeinsamen deterministischen Hop-Latenz $d_{CH}$ ist, kann diese Situation ausgenutzt werden, um ein extrem vereinfachtes Synchronisierungsverfahren der Lokalzeit aller Knoten in dem Netzwerk auf eine Lokalzeit eines bestimmten Master-Knotens mit einer Hauptuhr CLK_M durchzuführen. Die Synchronisation erfolgt hierbei implizit durch eine periodische Übertragung von Paketen von dem Timing-Masterknoten zu allen anderen Knoten, wobei willkürliche Routen durch das Netzwerk gewählt werden. Diese Pakete können einen Zeitstempel tragen, welcher die Lokalzeit bei dem Timing-Masterknoten reflektiert, die bei dem Start der Übertragung gerade aktuell ist ($t_{tx}$ Zeitstempel oder engl. "time stamp"). Darüber hinaus können diese Datenpakete oder Synchronisierungsdatenpakete SDP eine eindeutige Kennung des Timing-Masterknotens als Absenderadresse (Node ID) beinhalten und können darüber hinaus anzeigen, wie viele Hops (#hop) auf der aktuellen Route durch das Netzwerk zu dem Knoten, welcher gerade das Paket empfängt, durchgeführt wurden.

Basierend auf der von dem Timing-Masterknoten gesendeten Synchronisierungsdatenpaketen SDP ist die aktuelle lokale Zeit bei dem Timing-Masterknoten, wenn solch ein Synchronisierungsdatenpaket bei dem Knoten ankommt, gleich dem in dem Synchronisierungsdatenpaket SDP enthaltenen Zeitstempel $t_{tx}$ plus der Anzahl der Hops h mal der festgelegten gemeinsamen deterministischen Hop-Latenz $d_{CH}$:

$$T_{master} = t_{tx} + d_{CH} * h.$$

Dieses Verfahren gemäß der Erfindung ist ein implizites Synchronisierungsverfahren, wobei kein spezifisches Protokoll implementiert werden muss, um die Zeit zwischen einem Timing-Master und Slave-Knoten in einem Netzwerk umzusetzen, da die Synchronisierung implizit ablaufen kann, bei jeglicher Art von Kommunikation zwischen dem Timing-Master und dem Slave-Knoten, wenn diese in periodischen Abständen oder innerhalb eines bestimmten Zeitfensters wiederkehrend stattfindet. So kann das Datenpaket SDP einerseits dediziert zur Synchronisation des gesamten Datennetzwerkes sein, es ist aber auch vorstellbar, dass in periodischen Abständen oder innerhalb eines bestimmten Zeitfensters wiederkehrend bei normalen Datenpaketen an entsprechende Slave-Datennetzwerk-Knoten 110S die Synchronisierungsdatenpaket-Information enthaltend den Zeitstempel, die Anzahl der Hops und die Knoten-ID des Master-Datennetzwerk-Knotens 110M im Header eingefügt wird. Die Wiederholdauer des periodischen Sendens des Synchronisierungsdatenpakets SDP kann in Abstimmung mit den Genauigkeitsanforderungen, der Drift der Nebenuhren über die Zeit und anderer Faktoren gewählt werden.

Dedizierte Synchronisierungsdatenpakete sind also nur dann erforderlich, wenn keine regelmäßige oder innerhalb eines bestimmten Zeitfensters wiederkehrende Kommunikation zwischen dem Timing Master und den anderen Knoten im Netzwerk sowieso stattfindet. Die Synchronisation erfolgt implizit durch beliebige Datenpakete, da die notwendige Information zur Synchronisation in jedem Paket-Header eingebettet ist. Diese Felder sind natürlich nur relevant, falls der Ursprungsknoten dem Timing Master entspricht. Ein Synchronisierungsdatenpaket SDP ist dann nichts anderes, als ein normales Paket, welches nicht zwingend Daten transportieren muss.

Jeder Knoten verwendet bei allen Paketen, die er erzeugt, die derzeit gültige lokale Zeit als TX Zeitstempel $t_{tx}$. Dieser wird im Falle von Weiterleitung durch darauf folgende Knoten nicht angetastet, nur der Hop Count h wird erhöht. Potenziell ist jeder Knoten in der Lage, die Rolle des Timing Master zu übernehmen. Dies wird fest im Voraus konfiguriert, ohne besondere Auswirkungen auf das Sendeverhalten der Knoten. Einzig beim Empfang ist es wichtig, dass Synchronisationsinformation nur aus Paketen entnommen wird, die ihren Ursprung beim Timing Master haben (TX ID = Master). Damit wird der Prozess der Zeitsynchronisation sehr stark abstrahiert und es ist keine besondere Steuerung notwendig, außer das Festlegen der Rollen im Voraus sowie das sicher Stellen, dass die Applikationsschicht Netzwerkverkehr zwischen Timing Master und allen anderen Knoten in regelmäßigen Abständen aufplant, welcher dann implizit für die Zeitsynchronisation im Netz-

werk sorgt. Synchronisationsinformation umfasst die Kombination aus TX Zeitstempel $t_{tx}$, Hop Count h, sowie die TX ID, die allesamt z.B. als Teil des Paket-Headers (Felder) transportiert werden können, sowie die bei jedem Knoten lokal hinterlegte gemeinsame deterministische Hop-Latenzdauer dCH. Im Detail veranlasst die Synchronisierungssteuerungseinheit CONFIG den zweiten Datennetzwerk-Knoten 110B, wenn dieser als Slave-Datennetzwerk-Knoten 110S arbeitet, zu folgenden Schritten.

So empfängt dieser von einem Master-Datennetzwerk-Knoten 110M mit der Hauptuhr CLK_M Synchronisierungsdatenpakete SDP mit einem Hauptuhr-Zeitstempel $t_{tx}$. Wie in Fig. 5 gezeigt, erfolgt dann nach Empfang des Synchronisierungsdatenpakets durch die Datenempfangseinheit RX entweder eine Verzögerung des Synchronisierungsdatenpakets SDP (Pfad (a) in Fig. 5), wenn die Ein-Hop-Datenweiterleitungsstrecke entsprechend dem ersten Ausführungsbeispiel oder wie in den Fig. 3A oder 4A gezeigt, definiert ist. Für den Fall, dass die Ein-Hop-Weiterleitungsstrecke gemäß dem zweiten Ausführungsbeispiel, also wie in den Fig. 3B und 4B gezeigt, definiert ist, muss keine Verzögerung durch die Verzögerungspuffer CDB erfolgen (Pfad (b) in Fig. 5), da die spezifische Latenzabgleichszeit $d_{ARX}$ bereits von dem vorangegangenen sendenden Datennetzwerk-Knoten 110 für die Eingangsübertragungsstrecke x aufaddiert wurde. Mittels einer Steuerung der Kommunikationssteuereinheit LCU/CONFIG wird dann die Nebenuhr CLK_S des zweiten Datennetzwerk-Knotens 110B oder 110S synchronisiert. Die Nebenuhr CLK_S des zweiten Datennetzwerk-Knotens 110B wird also mit der Hauptuhrzeit entsprechend der vollzogenen Anzahl an Hops h des Synchronisierungsdatenpakets SDP zwischen Master-Datennetzwerk-Knoten 110M und dem zweiten Datennetzwerk-Knoten 110B sowie mittels der gemeinsamen deterministischen Hop-Latenzdauer $d_{CH}$ gemäß der Formel $t_{master} = t_{tx} + d_{CH} * h$ synchronisiert.

Für den Fall, dass der zweite Datennetzwerk-Knoten 110B als Master-Datennetzwerk-Knoten 110M arbeitet, wird dieser durch die Synchronisierungssteuereinheit CONFIG zu folgenden Schritten veranlasst: So sorgt die Synchronisierungssteuereinheit CONFIG dafür, dass zu einem Zeitpunkt $t_{tx}$ Synchronisierungsdatenpakete SDP mit einem Hauptuhr-Zeitstempel $t_{tx}$ zu den Slave-Datennetzwerk-Knoten 110S gesendet werden, wobei das Synchronisierungsdatenpaket SDP neben dem Hauptuhr-Zeitstempel $t_{tx}$ die Anzahl der Hops h sowie ein Kennungszeichen ID_M des Master-Datennetzwerk-Knotens 110M enthalten kann.

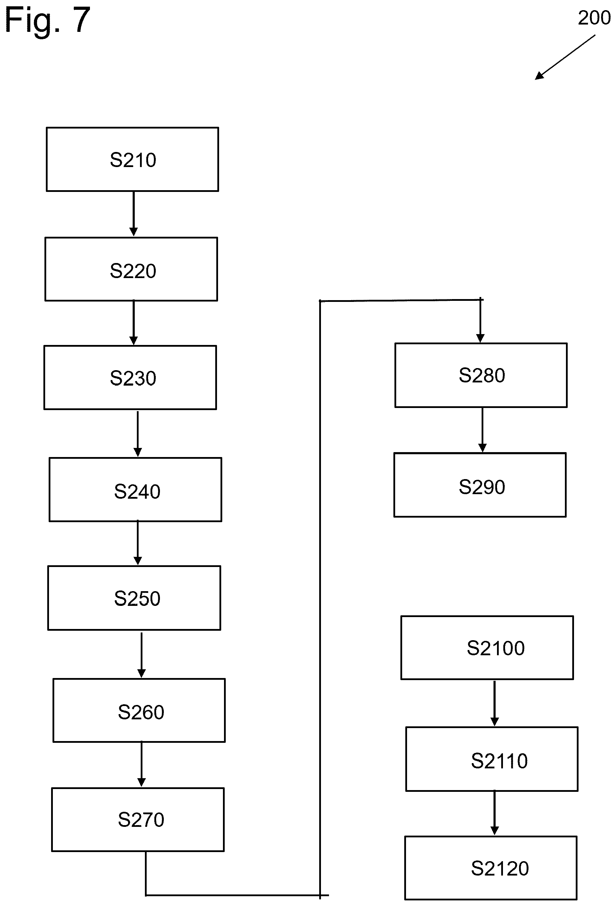

Gemäß der Erfindung wird auch ein Verfahren zum Initialisieren eines synchronisierten Datennetzwerk-Systems 10 bereitgestellt, das die folgenden Schritte aufweist, wie in Fig. 7 gezeigt. So wird in einem Schritt S210 von einer Kommunikations-Steuereinheit LCU eines Slave-Datennetzwerk-Knotens 110S ein Umlauf-Latenz-Messbefehl RTMR an die Datensendeeinheit TX des Slave-Datennetzwerk-Knotens 110S gesendet. In einem Schritt S220 wird durch die Datensendeeinheit TX des Slave-Datennetzwerk-Knotens 110S ein Umlaufsignal oder Ping-Signal über eine entsprechende direkte Datenübertragungsstrecke x einer zu vermessenden Ein-Hop-Datenweiterleitungsstrecke $x_{XBB}$, $x_{BBY}$ an eine Datenempfangseinheit RX eines entsprechenden weiteren Slave-Datennetzwerk-Knotens 110S gesendet.

Hierbei wird ein Timer in einem Schritt S230 des Slave-Datennetzwerk-Knotens 110S bei Versendung des Umlaufsignals durch eine Latenzabgleichseinheit LMU des Slave-Datennetzwerk-Knotens 110S gestartet. Nach dem Empfangen (Schritt S240) des von dem entsprechenden weiteren Slave-Datennetzwerk-Knoten 110S zurückgesandten Umlaufsignals über die entsprechende direkte Datenübertragungsstrecke x durch die Datenempfangseinheit RX des Slave-Datennetzwerk-Knotens 110S wird in einem Schritt S250 der Timer durch die Latenzabgleichseinheit LMU des Slave-Datennetzwerk-Knotens 110S bei Empfang des zurückgesandten Umlaufsignals gestoppt. In einem Schritt S260 wird die Umlauf-Latenz $d_{RT}$ aus dem Timer des Slave-Datennetzwerk-Knotens 110S ausgelesen und in einem Schritt S270 die spezifische Hop-Latenz $d_{H\_XBB}$, $d_{H\_BBY}$ der zu vermessenden Ein-Hop-Datenweiterleitungsstrecke $x_{XBB}$, $x_{BBY}$ durch Addition der intrinsischen Knotenlatenz $d_{SRX\_B}$ zu der halben Umlauf-Latenz $d_{RT}$ berechnet. Nach dem Wiederholen der Schritte (S280) für alle zu vermessenden Ein-Hop-Datenweiterleitungsstrecken $x_{XBB}$, $x_{BBY}$ werden die ermittelten Hop-Latenzen $d_{H\_XBB}$, $d_{H\_BBY}$ aller zu vermessenden Ein-Hop-Datenweiterleitungsstrecken $x_{XBB}$, $x_{BBY}$ gespeichert (S290).

Optional kann hierbei, wenn bei der Initialisierung die gemeinsame Hop-Latenz aus allen ermittelten Hop-Latenzen aller zu vermessenden Ein-Hop-Datenweiterleitungstrecken durch einen Master-Datennetzwerk-Knoten 110M festgelegt wird, folgende weitere Schritte durchgeführt werden: In einem Schritt S2100 werden die ermittelten Hop-Latenzen $d_{H\_XBB}$, $d_{H\_BBY}$ aller zu vermessenden Ein-Hop-Datenweiterleitungsstrecken $x_{XBB}$, $x_{BBY}$ an den Master-Datennetzwerk-Knoten 110M übersandt. Nachdem der Master-Datennetzwerk-Knoten 110M in einem Schritt S2110 die jeweiligen ermittelten Hop-Latenzen $d_{H\_XZZ}$, $d_{H\_ZZY}$ der zu vermessenden Ein-Hop-Datenweiterleitungsstrecke $x_{XZZ}$, $x_{ZZY}$ aller Slave-Datennetzwerk-Knoten 110S empfangen hat, legt dieser in einem Schritt S2120 die gemeinsame Hop-Latenz $d_{CH}$ aus den übermittelten Hop-Latenzen $d_{H\_XZZ}$, $d_{H\_ZZY}$ fest, wobei die vorbestimmte feste gemeinsame Hop-Latenz $d_{CH}$ größer als alle übermittelten Hop-Latenzen $d_{H\_XZZ}$, $d_{H\_ZZY}$ ist.

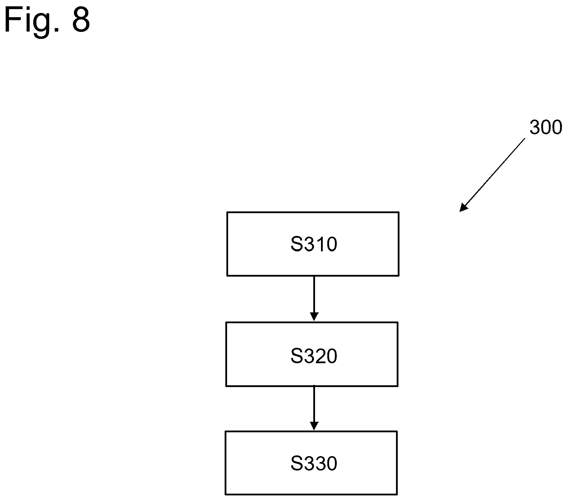

In Fig. 8 ist ferner das von der Erfindung bereitgestellte Verfahren zum Synchronisieren eines synchronisierten Datennetzwerk-Systems 10 mit zumindest einem Master-Datennetzwerk-Knoten 110M und Slave-Datennetzwerk-Knoten 110S dargestellt, das die folgenden Schritte aufweist:

So wird in Schritt S310 durch den Master-Datennetzwerk-Knoten 110M zu einem Zeitpunkt $t_{tx}$ Syn-

chronisierungsdatenpakete SDP mit einem Hauptuhr-Zeitstempel $t_{tx}$ zu den Slave-Datennetzwerk-Knoten 110S gesendet. In einem Schritt S320 werden durch die Slave-Datennetzwerk-Knoten 110S von dem Master-Datennetzwerk-Knoten 110M mit einer Hauptuhr CLK_M gesendete Synchronisierungspakete SDP mit einem Hauptuhr-Zeitstempel $t_{tx}$ empfangen. Nach dem Empfang eines Synchronisierungsdatenpakets SDP wird dann die Nebenuhr CLK_S in einem Schritt S330 des Slave-Datennetzwerk-Knotens 110S mit der Hauptuhrzeit entsprechend der vollzogenen Anzahl an Hops h des Synchronisierungsdatenpakets SDP zwischen Master-Datennetzwerk-Knoten 110M und Slave-Datennetzwerk-Knoten 110S sowie mittels der gemeinsamen deterministischen Hop-Latenzdauer $d_{CH}$ gemäß der Form $t_{master} = t_{tx} + d_{CH}{}^{*}$ h synchronisiert.

Gemäß der Erfindung werden auch ein synchronisiertes Datennetzwerk-System 10, ein Master-Datennetzwerk-Knoten 110M und ein Slave-Datennetzwerk-Knoten 110S bereitgestellt, die dazu angepasst sind, die obigen erfindungsgemäßen Initialisierungs- oder Synchronisierungsverfahren auszuführen.

## Patentansprüche

1. Synchronisiertes Datennetzwerk-System (10), mit

    - einem Datennetzwerk (100), das Datennetzwerk-Knoten (110) miteinander über direkte bidirektionale Datenübertragungsstrecken (x) zwischen benachbarten Datennetzwerk-Knoten (110) zum Datenaustausch verbindet;
    - einer Knotenkette der Datennetzwerk-Knoten (110) aus einem aufeinander folgenden ersten (110A), zweiten (110B) und dritten (110C) Datennetzwerk-Knoten, wobei der zweite Datennetzwerk-Knoten (110B) dazu angepasst ist, auf einer Datenweiterleitungsstrecke (x$_{ABBC}$) von dem ersten Datennetzwerk-Knoten (110A) auf einer ersten direkten Datenübertragungsstrecke (x$_{AB}$) zwischen dem erstem (110A) und dem zweitem (110B) Datennetzwerk-Knoten gesendete Daten zu empfangen und auf einer zweiten direkten Datenübertragungsstrecke (x$_{BC}$) zwischen dem zweitem (110B) und dem dritten (110C) Datennetzwerk-Knoten an den dritten Datennetzwerk-Knoten (110C) sendend weiterzuleiten,

    **dadurch gekennzeichnet, dass**
    der zweite Datennetzwerk-Knoten (110B) dazu angepasst ist, eine Weiterleitung der Daten auf einer Ein-Hop-Datenweiterleitungstrecke (x$_{ABB}$, x$_{BBC}$) zwischen erstem und drittem Datennetzwerk-Knoten (110A, 110C) so zu verzögern, dass die Hop-Latenz (d$_{H\_ABB}$, d$_{H\_BBC}$) gleich einer für alle Datennetzwerk-Knoten des Datennetzwerk-Systems, die Daten zwischen Datennetzwerkknoten des Datennetzwerk-Systems weiterleiten, gleichen, vorbestimmten, festen und gemeinsamen Hop-Latenz (d$_{CH}$) ist, die nicht abhängig von netzwerkspezifischen oder knotenspezifischen Latenzen ist.

2. Synchronisiertes Datennetzwerk-System (10) nach Anspruch 1, ferner mit

    - einem Master-Datennetzwerk-Knoten (110M) mit einer Hauptuhr (CLK_M), der dazu angepasst ist, Synchronisierungsdatenpakete (SDP) mit einem Hauptuhr-Zeitstempel $t_{tx}$ an Slave-Datennetzwerk-Knoten (110S) zu versenden und die Nebenuhren (CLK_S) der Slave-Datennetzwerk-Knoten (110S) entsprechend der vollzogenen Anzahl an Hops h des Synchronisierungsdatenpakets (SDP) zwischen Master-Datennetzwerk-Knoten (110M) und jeweiligem Slave-Datennetzwerk-Knoten (110S) sowie mittels der gemeinsamen Hop-Latenzdauer d$_{CH}$ gemäß der Formel $t_{master} = t_{tx} + d_{CH} * h$ mit der Hauptuhrzeit zu synchronisieren.

3. Synchronisiertes Datennetzwerk-System (10) nach Anspruch 1 oder 2, **dadurch gekennzeichnet, dass** die Ein-Hop-Datenweiterleitungstrecke (x$_{ABB}$, x$_{BBC}$) einer Datenweiterleitungsstrecke (x$_{ABB}$) entspricht, die beginnend an der Senderseite des ersten Datennetzwerk-Knotens (110A) über die direkte Datenübertragungsstrecke (x$_{AB}$) zwischen dem erstem (110A) und dem zweitem (110B) Datennetzwerk-Knoten durch den zweiten Datennetzwerk-Knoten (110B) hindurch und endend an der Senderseite des zweiten Datennetzwerk-Knotens (110B) verläuft.

4. Synchronisiertes Datennetzwerk-System (10) nach Anspruch 1 oder 2, **dadurch gekennzeichnet, dass** die Ein-Hop-Datenweiterleitungstrecke (x$_{ABB}$, x$_{BBC}$) einer Datenweiterleitungsstrecke (x$_{BBC}$) entspricht, die beginnend an der Empfängerseite des zweiten Datennetzwerk-Knotens (110B) durch den zweiten Datennetzwerk-Knoten (110B) hindurch und über die direkte Datenübertragungsstrecke (x$_{BC}$) zwischen dem zweitem (110B) und dritten (110C) Datennetzwerk-Knoten endend an der Empfängerseite des dritten Datennetzwerk-Knotens (110C) verläuft.

5. Synchronisiertes Datennetzwerk-System (10) nach einem der vorhergehenden Ansprüche, **dadurch gekennzeichnet, dass** der zweite Datennetzwerk-Knoten (110B) folgendes umfasst:

    - eine Datensendeeinheit (TX), welche mit einer direkten Datenübertragungsstrecke (x) verbunden ist, um Daten (ODP) zu weiteren Datennetzwerk-Knoten (110) zu senden;
    - eine Datenempfangseinheit (RX), welche mit einer direkten Datenübertragungsstrecke (x) verbunden ist, um Daten (IDP) von weiteren Datennetzwerk-Knoten (110) zu empfangen;

- eine Latenzabgleicheinheit (LMU), die dazu angepasst ist, mittels einer gespeicherten spezifischen Hop-Latenz ($d_{H\_ABB}$, $d_{H\_BBC}$) der aktuellen Ein-Hop-Datenweiterleitungstrecke ($x_{ABB}$, $x_{BBC}$) und mittels der vorbestimmten festen gemeinsamen Hop-Latenzdauer ($d_{CH}$) eine für die aktuelle Ein-Hop-Datenweiterleitungstrecke ($x_{ABB}$, $x_{BBC}$) spezifische Latenzabgleichsdauer ($d_{ARX}$) zu errechnen; und

- einen Verzögerungspuffer (CDB), der zwischen der Datenempfangseinheit (RX) und der Datensendeeinheit (TX) zwischengeschaltet ist, um die Weiterleitung von Datenpaketen (RDP_fwd) auf der aktuellen Ein-Hop-Datenweiterleitungstrecke ($x_{ABB}$, $x_{BBC}$) um die von der Latenzabgleicheinheit (LMU) empfangene spezifische Latenzabgleichsdauer ($d_{ARX}$) zu verzögern.

6. Synchronisiertes Datennetzwerk-System (10) nach Anspruch 5, **dadurch gekennzeichnet, dass** die Latenzabgleicheinheit (LMU), folgendes umfasst:

- einen Timer zum Messen einer Umlauf-Latenz ($d_{RT}$) auf einer zu vermessenden Ein-Hop-Datenweiterleitungstrecke ($x_{ABB}$, $x_{BBC}$);
- einen Speicher zum Speichern der intrinsischen Knotenlatenz ($d_{SRX\_B}$), der Umlauf-Latenzen ($d_{RT}$) der Ein-Hop-Datenweiterleitungstrecken ($x_{ABB}$, $x_{BBC}$) des zweiten Datennetzwerk-Knotens (110B) sowie der vorbestimmten festen gemeinsamen Hop-Latenz ($d_{CH}$); und
- eine Recheneinheit, welche dazu angepasst ist, die Latenzabgleichsdauer ($d_{ARX}$) über die Formel $d_{ARX} = d_{CH} - d_{RT}/2 - d_{SRX\_B}$ zu errechnen.

7. Synchronisiertes Datennetzwerk-System (10) nach einem der vorhergehenden Ansprüche, **dadurch gekennzeichnet, dass** der zweite Datennetzwerk-Knoten (110B) eine Kommunikations-Steuereinheit (LCU/CONFIG) zur Steuerung einer Initialisierung und Synchronisierung umfasst, die folgendes aufweist:

- eine Initialisierungssteuereinheit (LCU), die den Initialisierungsprozess der Datennetzwerk-Knoten (110) steuert; und
- eine Synchronisierungssteuereinheit (CONFIG), die die Synchronisierung der Datennetzwerk-Knoten (110) steuert.

8. Synchronisiertes Datennetzwerk-System (10) nach Anspruch 7, **dadurch gekennzeichnet, dass** die Initialisierungssteuereinheit (LCU) den zweiten Datennetzwerk-Knoten (110B) als Slave-Datennetzwerk-Knoten (110S) zu folgenden Schritten veranlasst:

- Senden, von der Kommunikations-Steuereinheit (LC), eines Umlauf-Latenz-Messbefehls (RTMR) an die Datensendeeinheit (TX);
- Senden, durch die Datensendeeinheit (TX), eines Umlaufsignals oder Ping-Signals über eine entsprechende direkte Datenübertragungsstrecke (x) einer zu vermessenden Ein-Hop-Datenweiterleitungstrecke ($x_{XBB}$, $x_{BBY}$) an eine Datenempfangseinheit (RX) eines entsprechenden empfangenden Datennetzwerk-Knotens (110);
- Starten eines Timers bei Versendung des Umlaufsignals durch die Latenzabgleicheinheit (LMU);
- Empfangen, durch die Datenempfangseinheit (RX), des von dem entsprechenden Datennetzwerk-Knoten (110) zurückgesandten Umlaufsignals über die entsprechende direkte Datenübertragungsstrecke (x);
- Stoppen des Timers durch die Latenzabgleicheinheit (LMU) bei Empfang des zurückgesandten Umlaufsignals;
- Auslesen der Umlauf-Latenz ($d_{RT}$) aus dem Timer;
- Berechnen der spezifischen Hop-Latenz ($d_{H\_XBB}$, $d_{H\_BBY}$) der zu vermessenden Ein-Hop-Datenweiterleitungstrecke ($x_{XBB}$, $x_{BBY}$) durch Addition der intrinsischen Knotenlatenz ($d_{SRX\_B}$) zu der halben Umlauf-Latenz ($d_{RT}$);
- Wiederholen der Schritte für alle zu vermessenden Ein-Hop-Datenweiterleitungstrecken ($x_{XBB}$, $x_{BBY}$); und
- Speichern der ermittelten Hop-Latenzen ($d_{H\_XBB}$, $d_{H\_BBY}$) aller zu vermessenden Ein-Hop-Datenweiterleitungstrecken ($x_{XBB}$, $x_{BBY}$).

9. Synchronisiertes Datennetzwerk-System (10) nach Anspruch 7, **dadurch gekennzeichnet, dass** die Synchronisierungssteuereinheit (CONFIG) den zweiten Datennetzwerk-Knoten (110B) als Slave-Datennetzwerk-Knoten (110S) zu folgenden Schritten veranlasst:

- Empfangen, von einem Master-Datennetzwerk-Knoten (110M) mit einer Hauptuhr (CLK_M), Synchronisierungsdatenpakete (SDP) mit einem Hauptuhr-Zeitstempel $t_{tx}$; und
- Synchronisieren der Nebenuhr (CLK_S) des zweiten Datennetzwerk-Knotens (110B) mit der Hauptuhrzeit entsprechend der vollzogenen Anzahl an Hops h des Synchronisierungsdatenpakets (DLP) zwischen Master-Datennetzwerk-Knoten (110M) und dem zweitem Datennetzwerk-Knoten (110B) sowie mittels der gemeinsamen deterministischen Hop-Latenzdauer $d_{CH}$ gemäß der Formel $t_{master} = t_{tx} + d_{CH} * h$.

**10.** Synchronisiertes Datennetzwerk-System (10) nach Anspruch 7, **dadurch gekennzeichnet, dass** die Synchronisierungssteuereinheit (CONFIG) den zweiten Datennetzwerk-Knoten (110B) als Master-Datennetzwerk-Knoten (110M) zu folgenden Schritten veranlasst:

- Senden zu einem Zeitpunkt $t_{tx}$ von Synchronisierungsdatenpaketen (SDP) mit einem Hauptuhr-Zeitstempel $t_{tx}$ zu den Slave-Datennetzwerk-Knoten (110S).

**11.** Synchronisiertes Datennetzwerk-System (10) nach Anspruch 9 oder 10, **dadurch gekennzeichnet, dass** das Synchronisierungsdatenpaket (SDP) neben dem Hauptuhr-Zeitstempel ($t_{tx}$) die Anzahl der Hops (h) sowie ein Kennungszeichen (ID_M) des Master-Datennetzwerk-Knoten (110M) enthält.

**12.** Synchronisiertes Datennetzwerk-System (10) gemäß einem der vorhergehenden Ansprüche, **dadurch gekennzeichnet, dass** es ein Avioniksystem-Datennetzwerk zur deterministischen Kommunikation zwischen den Datennetzwerk-Knoten (110) ist.

**13.** Verfahren zum Initialisieren eines synchronisierten Datennetzwerk-Systems (10), mit den folgenden Schritten:

- Senden (S210), von einer Kommunikations-Steuereinheit (LC) eines Slave-Datennetzwerk-Knotens (110S), eines Umlauf-Latenz-Messbefehls (RTMR) an die Datensendeeinheit (TX) des Slave-Datennetzwerk-Knotens (110S);
- Senden (S220), durch die Datensendeeinheit (TX) des Slave-Datennetzwerk-Knotens (110S), eines Umlaufsignals oder Ping-Signals über eine entsprechende direkte Datenübertragungsstrecke (x) einer zu vermessenden Ein-Hop-Datenweiterleitungstrecke ($x_{XBB}$, $x_{BBY}$) an eine Datenempfangseinheit (RX) eines entsprechenden weiteren Slave-Datennetzwerk-Knotens (110S);
- Starten (S230) eines Timers des Slave-Datennetzwerk-Knotens (110S) bei Versendung des Umlaufsignals durch eine Latenzabgleicheinheit (LMU) des Slave-Datennetzwerk-Knotens (110S);
- Empfangen (S240), durch die Datenempfangseinheit (RX) des Slave-Datennetzwerk-Knotens (110S), des von dem entsprechenden weiteren Slave-Datennetzwerk-Knoten (110S) zurückgesandten Umlaufsignals über die entsprechende direkte Datenübertragungsstrecke (x);
- Stoppen (S250) des Timers durch die Latenzabgleichseinheit (LMU) des Slave-Datennetzwerk-Knotens (110S) bei Empfang des zurückgesandten Umlaufsignals;
- Auslesen (S260) der Umlauf-Latenz ($d_{RT}$) aus dem Timer des Slave-Datennetzwerk-Knotens (110S);
- Berechnen (S270) der spezifischen Hop-Latenz ($d_{H\_XBB}$, $d_{H\_BBY}$) der zu vermessenden Ein-Hop-Datenweiterleitungstrecke ($x_{XBB}$, $x_{BBY}$) durch Addition der intrinsischen Knotenlatenz ($d_{SRX\_B}$) zu der halben Umlauf- Latenz ($d_{RT}$);
- Wiederholen (S280) der Schritte für alle zu vermessenden Ein-Hop-Datenweiterleitungstrecken ($x_{XBB}$, $x_{BBY}$);
- Speichern (S290) der ermittelten Hop-Latenzen ($d_{H\_XBB}$, $d_{H\_BBY}$) aller zu vermessenden Ein-Hop-Datenweiterleitungstrecken ($x_{XBB}$, $x_{BBY}$); und
- Verzögern einer Weiterleitung von Daten auf den Ein-Hop-Datenweiterleitungstrecken ($x_{XBB}$, $x_{BBY}$) so, dass die Hop-Latenz ($d_{H\_XBB}$, $d_{H\_BBY}$) gleich einer für alle Datennetzwerk-Knoten des Datennetzwerk-Systems, die Daten zwischen Datennetzwerkknoten des Datennetzwerk-Systems weiterleiten, gleichen, vorbestimmten, festen und gemeinsamen Hop-Latenz ($d_{CH}$) wird, die nicht abhängig von netzwerkspezifischen oder knotenspezifischen Latenzen ist.

**14.** Verfahren zum Synchronisieren eines synchronisierten Datennetzwerk-Systems (10) mit zumindest einem Master-Datennetzwerk-Knoten (110M) und Slave-Datennetzwerk-Knoten (110S), mit den folgenden Schritten:

- Senden (S310), durch den Master-Datennetzwerk-Knoten (110M), zu einem Zeitpunkt $t_{tx}$ von Synchronisierungsdatenpaketen (SDP) mit einem Hauptuhr-Zeitstempel $t_{tx}$ zu den Slave-Datennetzwerk-Knoten (110S).
- Empfangen (S320), durch die Slave-Datennetzwerk-Knoten (110S), von dem Master-Datennetzwerk-Knoten (110M) mit einer Hauptuhr (CLK_M), Synchronisierungsdatenpakete (SDP) mit einem Hauptuhr-Zeitstempel $t_{tx}$
- Synchronisieren (S330) der Nebenuhr (CLK_S) des Slave-Datennetzwerk-Knoten (110S) mit der Hauptuhrzeit entsprechend der vollzogenen Anzahl an Hops h des Synchronisierungsdatenpakets (SDP) zwischen Master-Datennetzwerk-Knoten (110M) und Slave-Datennetzwerk-Knoten (110B) sowie mittels einer für alle Datennetzwerk-Knoten des Datennetzwerk-Systems, die Daten zwischen Datennetzwerkknoten des Datennetzwerk-Systems weiterleiten, gleichen, vorbestimmten, festen und gemeinsamen Hop-Latenz $d_{CH}$, die nicht abhängig von netzwerkspezifischen oder knotenspezifischen Latenzen ist, gemäß der Formel $t_{master} = t_{tx} + d_{CH} * h$.

15. Synchronisiertes Datennetzwerk-System (10) mit zumindest einem Master-Datennetzwerk-Knoten (110M) und Slave-Datennetzwerk-Knoten (110S), das dazu angepasst ist, die Verfahren gemäß Anspruch 13 oder 14 auszuführen.

## Claims

1. A synchronized data network system (10), comprising:

   - a data network (100) that connects data network nodes (110) to one another via direct bidirectional data transmission links (x) between neighboring data network nodes (110) for an exchange of data;
   - a node chain of the data network nodes (110) consisting of successive first (110A), second (110B) and third (110C) data network nodes, wherein the second data network node (110B) is adapted to receive data transmitted on a first direct data transmission link ($x_{AB}$) between the first (110A) and the second (110B) data network nodes from the first data network node (110A) on a data forwarding link ($x_{ABBC}$) and to forward said data in transmit mode to the third data network node (110C) on a second direct data transmission link ($x_{BC}$) between the second (110B) and the third (110C) data network nodes,

   **characterized in that**
   the second data network node (110B) is adapted to delay forwarding of the data on a single-hop data forwarding link ($x_{ABB}$, $x_{BBC}$) between the first and the third data network nodes (110A, 110C) such that the hop latency ($d_{H\_ABB}$, $d_{H\_BBC}$) is equal to a hop latency ($d_{CH}$), which is identical, predetermined, fixed and common for all data network nodes of the data network system that forward data between data network nodes of the data network system and which is not dependent on network-specific or node-specific latencies.

2. The synchronized data network system (10) according to claim 1, further comprising:

   - a master data network node (110M) with a master clock (CLK_M) that is adapted to transmit synchronization data packets (SDP) with a master clock time stamp $t_{tx}$ to slave data network nodes (110S) and to synchronize the slave clocks (CLK_S) of the slave data network nodes (110S) with the master clock time in accordance with the completed number of hops h of the synchronization data packet (SDP) between master data network nodes (110M) and the respective slave data network node (110S), as well as by means of the common hop latency period $d_{CH}$ according to the formula $t_{master} = t_{tx} + d_{CH} * h$.

3. The synchronized data network system (10) according to claim 1 or 2, **characterized in that** the single-hop data forwarding link ($x_{ABB}$, $x_{BBC}$) corresponds to a data forwarding link ($x_{ABB}$), which, starting on the transmitter side of the first data network node (110A), passes through the second data network node (110B) via the direct data transmission link ($x_{AB}$) between the first (110A) and the second (110B) data network nodes and ends on the transmitter side of the second data network node (110B).

4. The synchronized data network system (10) according to claim 1 or 2, **characterized in that** the single-hop data forwarding link ($x_{ABB}$, $x_{BBC}$) corresponds to a data forwarding link ($x_{BBC}$), which, starting on the receiver side of the second data network node (110B), passes through the second data network node (110B) and ends, via the direct data transmission link ($x_{BC}$) between the second (110B) and the third (110C) data network nodes, on the receiver side of the third data network node (110C).

5. The synchronized data network system (10) according to any one of the preceding claims, **characterized in that** the second data network node (110B) comprises:

   - a data transmitting unit (TX) which is connected to a direct data transmission link (x) in order to transmit data (ODP) to other data network nodes (110);
   - a data receiving unit (RX) which is connected to a direct data transmission link (x) in order to receive data (IDP) from other data network nodes (110);
   - a latency matching unit (LMU) which is adapted to calculate, by means of a stored specific hop latency ($d_{H\_ABB}$, $d_{H\_BBC}$) of the current single-hop data forwarding link ($x_{ABB}$, $x_{BBC}$) and by means of the predetermined fixed common hop latency period ($d_{CH}$), a latency matching period ($d_{ARX}$) specific to the current single-hop data forwarding link ($x_{ABB}$, $x_{BBC}$); and
   - a delay buffer (CDB) that is interposed between the data receiving unit (RX) and the data transmitting unit (TX) to delay forwarding of data packets (RDP_fwd) on the current single-hop data forwarding link ($x_{ABB}$, $x_{BBC}$) by the specific latency matching period ($d_{ARX}$) received from the latency matching unit (LMU).

6. The synchronized data network system (10) according to claim 5, **characterized in that** the latency matching unit (LMU) comprises:

- a timer for measuring a roundtrip latency ($d_{RT}$) on a single-hop data forwarding link ($x_{ABB}$, $x_{BBC}$) to be measured;
- a memory for storing the intrinsic node latency ($d_{SRX\_B}$), the roundtrip latencies ($d_{RT}$) of the single-hop data forwarding links ($x_{ABB}$, $x_{BBC}$) of the second data network node (110B) and the predetermined fixed common hop latency ($d_{CH}$); and
- a calculation unit which is adapted to calculate the latency matching period ($d_{ARX}$) using the formula $d_{ARX} = d_{CH} - d_{RT}/2 - d_{SRX\_B}$.

7. The synchronized data network system (10) according to any one of the preceding claims, **characterized in that** the second data network node (110B) comprises a communication control unit (LCU/CONFIG) for controlling initialization and synchronization, including:

- an initialization control unit (LCU) that controls the initialization process of the data network nodes (110); and
- a synchronization control unit (CONFIG) that controls synchronization of the data network nodes (110).

8. The synchronized data network system (10) according to claim 7, **characterized in that** the initialization control unit (LCU) prompts the second data network node (110B) as the slave data network node (110S) to perform the steps of:

- transmitting a roundtrip measurement command (RTMR) from the communication control unit (LC) to the data transmitting unit (TX);
- transmitting, by the data transmitting unit (TX), a roundtrip signal or ping signal to a data receiving unit (RX) of a corresponding receiving data network node (110) via a corresponding direct data transmission link (x) of a single-hop data forwarding link ($x_{XBB}$, $x_{BBY}$) to be measured;
- starting a timer by the latency matching unit (LMU) upon transmission of the roundtrip signal;
- receiving, by the data receiving unit (RX), the roundtrip signal sent back from the corresponding data network node (110) via the corresponding direct data transmission link (x);
- stopping the timer by the latency matching unit (LMU) upon receipt of the roundtrip signal sent back;

- reading the roundtrip latency ($d_{RT}$) from the timer;
- calculating the specific hop latency ($d_{H\_XBB}$, $d_{H\_BBY}$) of the single-hop data forwarding link ($x_{XBB}$, $x_{BBY}$) to be measured by adding the intrinsic node latency ($d_{SRX\_B}$) to half the roundtrip latency ($d_{RT}$);
- repeating the steps for all the single-hop data forwarding links ($x_{XBB}$, $x_{BBY}$) to be measured; and
- storing the ascertained hop latencies ($d_{H\_XBB}$, $d_{H\_BBY}$) of all the single-hop data forwarding links ($x_{XBB}$, $x_{BBY}$) to be measured.

9. The synchronized data network system (10) according to claim 7, **characterized in that** the synchronization control unit (CONFIG) prompts the second data network node (110B) as the slave data network node (110S) to perform the steps of:

- receiving, from a master data network node (110M) with a master clock (CLK_M), synchronization data packets (SDP) with a master clock time stamp $t_{tx}$; and
- synchronizing the slave clock (CLK_S) of the second data network node (110B) with the master clock time in accordance with the completed number of hops h of the synchronization data packet (DLP) between master data network nodes (110M) and the second data network node (110B), as well as by means of the common deterministic hop latency period $d_{CH}$ according to the formula $t_{master} = t_{tx} + d_{CH} * h$.

10. The synchronized data network system (10) according to claim 7, **characterized in that** the synchronization control unit (CONFIG) prompts the second data network node (110B) as the master data network node (110M) to perform the steps of:

- transmitting, at a time $t_{tx}$, synchronization data packets (SDP) with a master clock time stamp $t_{tx}$ to the slave data network nodes (110S).

11. The synchronized data network system (10) according to claim 9 or 10, **characterized in that** the synchronization data packet (SDP), in addition to the master clock time stamp ($t_{tx}$), includes the number of hops (h) and an identifier (ID_M) of the master data network node (110M).

12. The synchronized data network system (10) according to any one of the preceding claims, **characterized in that** it is an avionics system data network for deterministic communication between the data network nodes (110).

13. A method for initializing a synchronized data network system (10), comprising the steps of:

- transmitting (S210) a roundtrip measurement command (RTMR) from a communication control unit (LC) of a slave data network node (110S) to the data transmitting unit (TX) of the slave data network node (110S);
- transmitting (S220), by the data transmitting unit (TX) of the slave data network node (110S), a roundtrip signal or ping signal to a data receiving unit (RX) of a corresponding additional slave data network node (110S) via a corresponding direct data transmission link (x) of a single-hop data forwarding link ($x_{XBB}$, $x_{BBY}$) to be measured;
- starting (S230) a timer of the slave data network node (110S) upon transmission of the roundtrip signal by a latency matching unit (LMU) of the slave data network node (110S);
- receiving (S240), by the data receiving unit (RX) of the slave data network node (110S), the roundtrip signal sent back from the corresponding additional slave data network node (110S) via the corresponding direct data transmission link (x);
- stopping (S250) the timer by the latency matching unit (LMU) of the slave data network node (110S) upon receipt of the roundtrip signal sent back;
- reading (S260) the roundtrip latency ($d_{RT}$) from the timer of the slave data network node (110S);
- calculating (S270) the specific hop latency ($d_{H\_XBB}$, $d_{H\_BBY}$) of the single-hop data forwarding link ($x_{XBB}$, $x_{BBY}$) to be measured by adding the intrinsic node latency ($d_{SRX\_B}$) to half the roundtrip latency ($d_{RT}$);
- repeating (S280) the steps for all the single-hop data forwarding links ($x_{XBB}$, $x_{BBY}$) to be measured;
- storing (S290) the ascertained hop latencies ($d_{H\_XBB}$, $d_{H\_BBY}$) of all the single-hop data forwarding links ($x_{XBB}$, $x_{BBY}$) to be measured; and
- delaying forwarding of data on the single-hop data forwarding links ($x_{XBB}$, $x_{BBY}$) such that the hop latency ($d_{H\_XBB}$, $d_{H\_BBY}$) becomes equal to a hop latency ($d_{CH}$), which is identical, predetermined, fixed and common for all data network nodes of the data network system that forward data between data network nodes of the data network system, and which is not dependent on network-specific or node-specific latencies.

14. A method for synchronizing a synchronized data network system (10) comprising at least one master data network node (110M) and slave data network nodes (110S), comprising the steps of:

- transmitting (S310), through the master data network node (110M) at a time $t_{tx}$, synchronization data packets (SDP) with a master clock time stamp $t_{tx}$ to the slave data network nodes (110S),
- receiving (S320), through the slave data network nodes (110S), synchronization data packets (SDP) with a master clock time stamp $t_{tx}$ from the master data network node (110M) with a master clock (CLK_M),
- synchronizing (S330) the slave clock (CLK_S) of the slave data network node (110S) with the master clock time in accordance with the completed number of hops h of the synchronization data packet (SDP) between master data network nodes (110M) and slave data network nodes (110B), as well as by means of a hop latency $d_{CH}$, which is identical, predetermined, fixed and common for all data network nodes of the data network system that forward data between data network nodes of the data network system and which is not dependent on network-specific or node-specific latencies, according to the formula $t_{master} = t_{tx} + d_{CH} * h$.

15. A synchronized data network system (10) comprising at least one master data network node (110M) and slave data network nodes (110S), which is adapted to carry out the methods according to claim 13 or 14.

**Revendications**

1. Système de réseau de données synchronisé (10), comprenant

- un réseau de données (100), qui relie des nœuds de réseau de données (110) entre eux par l'intermédiaire de lignes de transmission de données bidirectionnelles directes (x) entre des nœuds de réseau de données (110) voisins pour l'échange de données ;
- une chaîne de nœuds des nœuds de réseau de données (110) constituée d'un premier (110A), deuxième (110B) et troisième (110C) nœud de réseau de données consécutifs, dans lequel le deuxième nœud de réseau de données (110B) est adapté pour recevoir sur une ligne de transfert de données ($X_{ABBC}$) des données envoyées du premier nœud de réseau de données (110A) sur une première ligne de transmission de données directe ($X_{AB}$) entre le premier (110A) et le deuxième (110B) nœud de réseau de données et pour les transférer en émission au troisième nœud de réseau de données (110C) sur une deuxième ligne de transmission de données directe ($X_{BC}$) entre le deuxième (110B) et le troisième (110C) nœud de réseau de données,

**caractérisé en ce que**
le deuxième nœud de réseau de données (110B) est adapté pour retarder un transfert des données sur une ligne de transfert de données à un bond ($X_{ABB}$, $X_{BBC}$) entre les premier et troisième nœuds de réseau de données (110A, 110C) de telle sorte que la latence de bond ($d_{H\_ABB}$, $d_{H\_BBC}$) soit égale à une latence de bond ($d_{cH}$) identique, prédéterminée, fixe et commune à tous les nœuds de réseau de données du système de réseau de données qui transfèrent des données entre les nœuds de réseau de données du système de réseau de données, qui ne dépend pas des latences spécifiques au réseau ou spécifiques au nœud.

2. Système de réseau de données synchronisé (10) selon la revendication 1, comprenant en outre

   - un nœud de réseau de données maître (110M) comprenant une horloge principale (CLK_M) qui est adaptée pour envoyer des paquets de données de synchronisation (SDP) avec un horodatage d'horloge principale $t_{tx}$ à des nœuds de réseau de données esclaves (110S), et pour synchroniser avec l'heure principale les horloges secondaires (CLK_S) des nœuds de réseau de données esclaves (110S) en fonction du nombre de bonds h réalisés du paquet de données de synchronisation (SDP) entre le nœud de réseau de données maître (110M) et le nœud de réseau de données esclave (110S) respectif ainsi qu'à l'aide de la latence de bond $d_{cH}$ commune selon la formule $t_{master} = t_{tx} + d_{cH} * h$.

3. Système de réseau de données synchronisé (10) selon la revendication 1 ou 2, **caractérisé en ce que** la ligne de transfert de données à un bond ($X_{ABB}$, $X_{BBC}$) correspond à une ligne de transfert de données ($X_{ABB}$) qui s'étend en commençant du côté émetteur du premier nœud de réseau de données (110A) par l'intermédiaire de la ligne de transmission de données directe ($X_{AB}$) entre le premier (110A) et le deuxième (110B) nœud de réseau de données à travers le deuxième nœud de réseau de données (110B) et en terminant du côté émetteur du deuxième nœud de réseau de données (110B).

4. Système de réseau de données synchronisé (10) selon la revendication 1 ou 2, **caractérisé en ce que** la ligne de transfert de données à un bond ($X_{ABB}$, $X_{BBC}$) correspond à une ligne de transfert de données ($X_{BBC}$) qui s'étend en commençant du côté récepteur du deuxième nœud de réseau de données (110B) à travers le deuxième nœud de réseau de données (110B) et par l'intermédiaire de la ligne de transmission de données directe ($X_{BC}$) entre le deuxième (110B) et troisième (110C) nœud de réseau de données se terminant sur le côté récepteur du troisième nœud de réseau de données (110C).

5. Système de réseau de données synchronisé (10) selon l'une des revendications précédentes, **caractérisé en ce que** le deuxième nœud de réseau de données (110B) comprend ce qui suit :

   - une unité d'émission de données (TX), qui est reliée à une ligne de transmission de données directe (x) pour émettre des données (ODP) vers d'autres nœuds de réseau de données (110) ;
   - une unité de réception de données (RX), qui est reliée à une ligne de transmission de données directe (x) pour recevoir des données (IDP) d'autres nœuds de réseau de données (110) ;
   - une unité d'équilibrage de latence (LMU), qui est adaptée pour calculer, au moyen d'une latence de bond spécifique ($d_{H\_ABB}$, $d_{H\_BBC}$) mémorisée de la ligne de transfert de données à un bond ($X_{ABB}$, $X_{BBC}$) actuelle et au moyen de la durée de latence de bond ($d_{cH}$) prédéterminée fixe commune, une durée d'équilibrage de latence spécifique ($d_{ARX}$) pour la ligne de transfert de données à un bond ($X_{ABB}$, $X_{BBC}$) actuelle ; et
   - un tampon de retardement (CDB), qui est intercalé entre l'unité de réception de données (RX) et l'unité d'émission de données (TX) pour retarder le transfert de paquets de données (RDP_fwd) sur la ligne de transfert de données à un bond ($X_{ABB}$, $X_{BBC}$) actuelle de la durée d'équilibrage de latence spécifique ($d_{ARX}$) reçue par l'unité d'équilibrage de latence (LMU).

6. Système de réseau de données synchronisé (10) selon la revendication 5, **caractérisé en ce que** l'unité d'équilibrage de latence (LMU) comprend ce qui suit :

   - un temporisateur pour mesurer une latence en circulation ($d_{RT}$) sur une ligne de transfert de données à un bond ($X_{ABB}$, $X_{BBC}$) à mesurer ;
   - une mémoire pour mémoriser la latence de nœud intrinsèque ($d_{SRX\_B}$), les latences en circulation ($d_{RT}$) des lignes de transfert de données à un bond ($X_{ABB}$, $X_{BBC}$) du deuxième nœud de réseau de données (110B) ainsi que la latence de bond ($d_{CH}$) commune fixe prédéterminée ; et
   - une unité de calcul qui est adaptée pour calculer la durée d'ajustement de latence ($d_{ARX}$) par la formule $d_{ARX} = d_{CH} - d_{RT}/2 - d_{SRX\_B}$.

7. Système de réseau de données synchronisé (10) selon l'une des revendications précédentes, **caractérisé en ce que** le deuxième nœud de réseau de données (110B) comprend une unité de commande de communication (LCU/CONFIG) pour commander une initialisation et synchronisation, qui présente ce qui suit :

- une unité de commande d'initialisation (LCU) qui commande le processus d'initialisation des nœuds de réseau de données (110) ; et
- une unité de commande de synchronisation (CONFIG) qui commande la synchronisation des nœuds de réseau de données (110).

8. Système de réseau de données synchronisé (10) selon la revendication 7, **caractérisé en ce que** l'unité de commande d'initialisation (LCU) fait effectuer au deuxième nœud de réseau de données (110B) les étapes suivantes en tant que nœud de réseau de données esclave (110S) :

- émettre, depuis l'unité de commande de communication (LC), une instruction de mesure de latence en circulation (RTMR) en l'unité d'émission de données (TX) ;
- émettre, par l'unité d'émission de données (TX), un signal en circulation ou signal ping par l'intermédiaire d'une ligne de transmission de données directe (x) correspondante d'une ligne de transfert de données à un bond ($X_{XBB}$, $X_{BBY}$) à mesurer en une unité de réception de données (RX) d'un nœud de réseau de données (110) récepteur correspondant ;
- démarrer un temporisateur à l'envoi du signal en circulation par l'unité d'équilibrage de latence (LMU) ;
- recevoir, par l'unité de réception de données (RX), le signal en circulation renvoyé depuis le nœud de réseau de données (110) correspondant par l'intermédiaire de la ligne de transmission de données directe (x) correspondante ;
- arrêter le temporisateur par l'unité d'équilibrage de latence (LMU) à réception du signal en circulation renvoyé ;
- lire la latence en circulation ($d_{RT}$) à partir du temporisateur ;
- calculer la latence de bond spécifique ($d_{H\_XBB}$, $d_{H\_BBY}$) de la ligne de transfert de données à un bond ($X_{XBB}$, $X_{BBY}$) à mesurer par addition de la latence nodale intrinsèque ($d_{SRX\_B}$) à la demi-latence en circulation ($d_{RT}$) ;
- répéter les étapes pour toutes les lignes de transfert de données à un bond ($X_{XBB}$, $X_{BBY}$) à mesurer ; et
- mémoriser les latences de bond ($d_{H\_XBB}$, $d_{H\_BBY}$) déterminées de toutes les lignes de transfert de données à un bond ($X_{XBB}$, $X_{BBY}$) à mesurer.

9. Système de réseau de données synchronisé (10) selon la revendication 7, **caractérisé en ce que** l'unité de commande de synchronisation (CONFIG) fait effectuer au deuxième nœud de réseau de données (110B) les étapes suivantes en tant que nœud de réseau de données esclave (110S) :

- recevoir, d'un nœud de réseau de données maître (110M) comprenant une horloge principale (CLK_M), des paquets de données de synchronisation (SDP) avec un horodatage d'horloge principale $t_{tx}$ ; et
- synchroniser l'horloge secondaire (CLK_S) du deuxième nœud de réseau de données (110B) avec l'heure principale en fonction du nombre de bonds h effectués du paquet de données de synchronisation (DLP) entre le nœud de réseau de données maître (110M) et le deuxième nœud de réseau de données (110B) ainsi qu'au moyen de la durée de latence de bond $d_{CH}$ déterministe commune selon la formule $t_{master} = t_{tx} + d_{CH} * h$.

10. Système de réseau de données synchronisé (10) selon la revendication 7, **caractérisé en ce que** l'unité de commande de synchronisation (CONFIG) fait effectuer au deuxième nœud de réseau de données (110B) les étapes suivantes en tant que nœud de réseau de données maître (110M) :

- émettre à un moment $t_{tx}$ des paquets de données de synchronisation (SDP) avec un horodatage d'horloge principale $t_{tx}$ vers les nœuds de réseau de données esclaves (110S).

11. Système de réseau de données synchronisé (10) selon la revendication 9 ou 10, **caractérisé en ce que** le paquet de données de synchronisation (SDP) contient en plus de l'horodatage d'horloge principale ($t_{tx}$) le nombre de bonds (h) ainsi qu'un identifiant (ID_M) du nœud de réseau de données maître (110M).

12. Système de réseau de données synchronisé (10) selon l'une des revendications précédentes, **caractérisé en ce qu'il** s'agit d'un réseau de données de système avionique pour la communication déterministe entre les nœuds de réseau de données (110).

13. Procédé d'initialisation d'un système de réseau de données synchronisé (10), comprenant les étapes suivantes :

- émettre (S210), depuis une unité de commande de communication (LC) d'un nœud de réseau de données esclave (110S), une instruction de mesure de latence en circulation (RTMR) en l'unité d'émission de données (TX) du nœud de réseau de données esclave (110S) ;
- émettre (S220), par l'unité d'émission de données (TX) du nœud de réseau de données esclave (110S), un signal en circulation ou signal ping par l'intermédiaire d'une ligne de transmission de données directe (x) correspondante d'une ligne de transfert de données à un bond ($X_{XBB}$, $X_{BBY}$) à mesurer en une unité de réception de données (RX) d'un autre nœud de réseau de données esclave (110S) correspondant ;

- démarrer (S230) un temporisateur du nœud de réseau de données esclave (110S) à l'envoi du signal en circulation par une unité d'équilibrage de latence (LMU) du nœud de réseau de données esclave (110S) ;

- recevoir (S240), par l'unité de réception de données (RX) du nœud de réseau de données esclave (110S), le signal en circulation renvoyé depuis l'autre nœud de réseau de données esclave (110S) correspondant par l'intermédiaire de la ligne de transmission de données directe (x) correspondante ;

- arrêter (S250) le temporisateur par l'unité d'équilibrage de latence (LMU) du nœud de réseau de données esclave (110S) à réception du signal en circulation renvoyé ;

- lire (S260) la latence en circulation ($d_{RT}$) à partir du temporisateur du nœud de réseau de données esclave (110S) ;

- calculer (S270) la latence de bond ($d_{H\_XBB}$, $d_{H\_BBY}$) spécifique de la ligne de transfert de données à un bond ($X_{XBB}$, $X_{BBY}$) à mesurer par addition de la latence nodale intrinsèque ($d_{SRX\_B}$) à la demi-latence en circulation ($d_{RT}$) ;

- répéter (S280) les étapes pour toutes les lignes de transfert de données à un bond ($X_{XBB}$, $X_{BBY}$) à mesurer ;

- mémoriser (S290) les latences de bond ($d_{H\_XBB}$, $d_{H\_BBY}$) déterminées de toutes les lignes de transfert de données à un bond ($X_{XBB}$, $X_{BBY}$) à mesurer ; et

- retarder un transfert de données sur les lignes de transfert de données à un bond ($X_{XBB}$, $X_{BBY}$) de telle sorte que la latence de bond ($d_{H\_XBB}$, $d_{H\_BBY}$) soit égale à une latence de bond ($d_{cH}$) identique, prédéterminée, fixe et commune pour tous les nœuds de réseau de données du système de réseau de données qui transfèrent des données entre les nœuds de réseau de données du système de réseau de données, qui ne dépend pas des latences spécifiques au réseau ou spécifiques au nœud.

**14.** Procédé de synchronisation d'un système de réseau de données synchronisé (10) comprenant au moins un nœud de réseau de données maître (110M) et un nœud de réseau de données esclave (110S), comprenant les étapes suivantes :

- émettre (S310), par le nœud de réseau de données maître (110M), à un moment $t_{tx}$ des

paquets de données de synchronisation (SDP) avec un horodatage d'horloge principale $t_{tx}$ vers les nœuds de réseau de données esclaves (110S).

- recevoir (S320), par les nœuds de réseau de données esclaves (110S), depuis le nœud de réseau de données maître (110M) avec une horloge principale (CLK_M), des paquets de données de synchronisation (SDP) avec un horodatage d'horloge principale $t_{tx}$

- synchroniser (S330) l'horloge secondaire (CLK_S) du nœud de réseau de données esclave (110S) avec l'heure principale en fonction du nombre de bonds h réalisés du paquet de données de synchronisation (SDP) entre le nœud de réseau de données maître (110M) et le nœud de réseau de données esclave (110S) respectif ainsi qu'au moyen d'une latence de bond ($d_{cH}$) identique, prédéterminée, fixe et commune pour tous les nœuds de réseau de données du système de réseau de données qui transfèrent des données entre les nœuds de réseau de données du système de réseau de données, qui ne dépend pas des latences spécifiques au réseau ou spécifiques au nœud, selon la formule $t_{master} = t_{tx} + d_{CH} * h$.

**15.** Système de réseau de données synchronisé (10) comprenant au moins un nœud de réseau de données maître (110M) et un nœud de réseau de données esclave (110S), qui est adapté pour exécuter les procédés selon la revendication 13 ou 14.

# Fig. 1

# Fig. 2

## Fig. 3A

$$d_{H\_ABB} = d_{CH}$$

## Fig. 3B

$$d_{H\_BBC} = d_{CH}$$

# Fig. 4A

10

110A

$x_{AB}$

110B

$d_{SRX\_B}$

$d_{CH}$

+ $d_{ARX\_ABB}$

$x_{BC}$

110C

$d_{SRX\_C}$

$d_{CH}$

+ $d_{ARX\_BCC}$

$x_{CD}$

110D

$d_{SRX\_D}$

$d_{CH}$

+ $d_{ARX\_CDD}$

$N * d_{CH}$

# Fig. 4B

10

$x_{AB}$

110B

$d_{SRX\_B}$

$+ d_{ARX\_BBC}$

$d_{CH}$

$x_{BC}$

110C

$d_{SRX\_C}$

$+ d_{ARX\_CCD}$

$d_{CH}$

$N * d_{CH}$

$x_{CD}$

110D

$d_{SRX\_D}$

$+ d_{ARX\_DDE}$

$d_{CH}$

$x_{DE}$

110E

# Fig. 5

110B / 110M / 110S

TDP_loc /
RDP_fwd_CA

LCU/CONFIG

TX → X → ODP

SDP

RTMR

$d_{H\_XZZ}$ / $d_{H\_ZZY}$

$d_{CH}$

CLK

CLK_M | CLK_S

CLK

$d_{CH}$

LMS

LMU

SDP

(a)   (b)

$d_{ARX}$

TX ← RDP_fwd_AC ← CDB ← RX ← X ← IDP

RDP_loc

# Fig. 6A

# Fig. 6B

$d_{SRX\_A}$

# Fig. 7

200

```
┌─────────┐
│  S210   │
└─────────┘
     │
     ▼
┌─────────┐
│  S220   │
└─────────┘
     │
     ▼
┌─────────┐                    ┌─────────┐
│  S230   │                    │  S280   │
└─────────┘                    └─────────┘
     │                              │
     ▼                              ▼
┌─────────┐                    ┌─────────┐
│  S240   │                    │  S290   │
└─────────┘                    └─────────┘
     │
     ▼
┌─────────┐
│  S250   │                    ┌─────────┐
└─────────┘                    │  S2100  │
     │                         └─────────┘
     ▼                              │
┌─────────┐                         ▼
│  S260   │                    ┌─────────┐
└─────────┘                    │  S2110  │
     │                         └─────────┘
     ▼                              │
┌─────────┐                         ▼
│  S270   │                    ┌─────────┐
└─────────┘                    │  S2120  │
                               └─────────┘
```

Fig. 8

300

```
┌─────────────────┐
│      S310       │
└─────────────────┘
         │
         ▼
┌─────────────────┐
│      S320       │
└─────────────────┘
         │
         ▼
┌─────────────────┐
│      S330       │
└─────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006168612 A1
- US 2018062764 A1

- WO 2021119675 A2

**In der Beschreibung aufgeführte Nicht-Patentliteratur**

- *Integrated Modular Avionics (IMA) Development Guidance and Certification Considerations*, 08 November 2005